# EUROPÄISCHE PATENTSCHRIFT

(11) **EP 3 019 757 B1**
(45) Veröffentlichungstag und Bekanntmachung des Hinweises auf die Patenterteilung: **18.09.2019**
(21) Anmeldenummer: 14750448.4
(22) Anmeldetag: 11.07.2014
(51) Int. Cl.: F16B 21/04, A45C 13/10, F16G 11/00

(54) **VERSCHLUSSVORRICHTUNG**
CLOSING DEVICE
DISPOSITIF DE FERMETURE

(30) Priorität: 11.07.2013 DE 102013213633
(43) Veröffentlichungstag der Anmeldung: 18.05.2016
(73) Patentinhaber: Fidlock GmbH, 30175 Hannover (DE)
(72) Erfinder: FIEDLER, Joachim, 30175 Hannover (DE)
(74) Vertreter: Maikowski & Ninnemann Patentanwälte Partnerschaft mbB
(86) Internationale Anmeldenummer: PCT/EP2014/064969
(87) Internationale Veröffentlichungsnummer: WO 2015/004278

(56) Entgegenhaltungen:
- EP-A1- 0 403 322
- EP-A2- 0 052 538
- DE-A1- 2 049 870
- GB-A- 2 449 906
- US-A1- 2007 034 595

## Beschreibung

Die Erfindung betrifft eine Verschlussvorrichtung nach dem Oberbegriff des Anspruchs 1.

Eine gattungsgemäße Verschlussvorrichtung weist ein erstes Verschlussteil mit mindestens einem ersten Verbindungsbereich und ein zweites Verschlussteil mit mindestens einem zweiten Verbindungsbereich auf, die nach Art einer Schraubverbindung miteinander zu verbinden und in eine Schließstellung überführbar sind, in der die beiden Verschlussteile über ihren Verbindungsbereiche aneinander gehalten sind. Dementsprechend ist zum Schließen der Verschlussvorrichtung das erste Verschlussteil entlang einer Verbindungsachse an das zweite Verschlussteil ansetzbar und unter Drehung um die Verbindungsachse relativ zu dem zweiten Verschlussteil in die Schließstellung verlagerbar.

Eine derartige Verschlussvorrichtung ist in der EP 0 403 322 A1 beschrieben.

Eine Verschlussvorrichtung mit zwei Verschlussteilen, die nach Art einer Schraubverbindung miteinander verbunden werden können, ist grundsätzlichen in unterschiedlichen Ausprägungen bekannt. Regelmäßig ist aber das Eindrehen eines Verschlussteils zum Schließen der Verschlussvorrichtung bei konventionellen Schraubverbindungen mit einem erhöhten Kraftaufwand verbunden, um die beiden Verschlussteile sicher aneinander zu arretieren. Zum Lösen ist dann ebenso eine vergleichsweise hohe Kraft aufzuwenden. Zudem eignen sich übliche Schraubverbindungen häufig nur bedingt für ein schnelles und unkompliziertes Öffnen.

Aus diesem Grund werden alternativ Verschlussvorrichtungen mit Bajonettverschluss eingesetzt, bei denen ebenfalls ein Verschlussteil um eine Verbindungsachse relativ zu einem anderen Verschlussteil gedreht wird, um die beiden Verschlussteile sicher aneinander zu arretieren und die Verschlussvorrichtung zu schließen. Bei Bajonettverschlüssen ist jedoch regelmäßig nachteilig, dass die beiden Verschlussteile sehr genau zueinander ausgerichtet werden müssen, um die Teile des Bajonettverschluss ineinanderzustecken.

Des Weiteren ist bei Verschlussvorrichtung, bei denen die beiden Verschlussteile zum Schließen der Verschlussvorrichtung nach Art einer Schraubverbindung miteinander verbunden werden, regelmäßig nachteilig, dass die Verbindung nicht ohne Weiteres gegen ein Öffnen der Verschlussvorrichtung gesichert werden kann. Um zu verhindern, dass eines der Verschlussteile unbeabsichtigt relativ zu dem anderen Verschlussteil in eine Öffnungsrichtung gedreht und hiermit die Verbindung gelöst wird, werden dann regelmäßig zusätzliche Bauteile, wie Stifte, Splinte oder Riegel, eingesetzt. Dies verschlechtert aber gerade bei manuell bedienbaren Verschlussvorrichtungen die Handhabung und den Komfort.

Aus der DE 10 2008 019 063 B4 ist ferner eine Verschlussvorrichtung bekannt, bei der ein erstes Verschlussteil mit einem zweiten Verschlussteil verrastet und über Federverriegelungselemente des zweiten Verschlussteils in einer Schließstellung gehalten wird. Die Federverriegelungselemente sind hierbei radial bezüglich der Verbindungsachse verlagerbar, entlang der das erste Verschlussteil an das zweite Verschlussteil herangeführt wird.

Bei einer aus der DE 10 2008 019 063 B4 bekannten Verschlussvorrichtung wird das erste Verschlussteil bei einem Ansetzen an das zweite Verschlussteil durch an dem ersten und zweiten Verschlussteil vorgesehene Magnetelemente relativ zu dem zweiten Verschlussteil automatisch in eine Position gedreht, in der sich die Magnete anziehen. Über die Magnete wird dann das erste Verschlussteil ohne Drehung entlang der Verbindungsachse in die Schließstellung gezogen, bis die Federverriegelungselemente einschnappen. Ein Öffnen der Verschlussvorrichtung ist dann aber durch Drehung des ersten Verschlussteils möglich. Hierbei beschreibt die DE 10 2008 019 063 B4, dass eine darin offenbarte Verschlussvorrichtung die Tendenz haben kann, sich bei Belastung aufzuschrauben. Einem unbeabsichtigten Öffnen der Verschlussvorrichtung könne aber durch geeignete Dimensionierung und Stärke der verwendeten Magnete entgegengewirkt werden.

Somit sieht die DE 10 2008 019 063 B4 zwar vor, dass das Öffnen der Verschlussvorrichtung durch Drehen des ersten Verschlussteils erreicht werden kann. Bei einer Verschlussvorrichtung der DE 10 2008 019 063 B4 ist jedoch im Unterschied zu einer gattungsgemäßen Verschlussvorrichtung nicht vorgesehen, dass das erste Verschlussteil nach Art einer Schraubenverbindung unter Drehung um die Verbindungsachse relativ zu dem zweiten Verschlussteil in eine Schließstellung verlagerbar ist. Vielmehr wird das erste Verschlussteil entlang der Verbindungsachse in die Schließstellung gezogen und durch radial bezüglich der Verbindungsachse verlagerbare Federverriegelungselemente an dem zweiten Verschlussteil verrastet. Darüber hinaus schlägt die DE 10 2008 019 063 B4 die Verwendung größerer oder stärkerer Magnete vor, um einem unbeabsichtigten Öffnen der Verschlussvorrichtung unter Last entgegenzuwirken. Bei höher belasteten Verschlüssen sind aber einer solchen Maßnahme Grenzen gesetzt, da nicht beliebig große Magnete eingesetzt werden können, ohne die Abmessungen der Verschlussvorrichtung und deren Herstellungskosten unverhältnismäßig ansteigen zu lassen.

Der vorliegenden Erfindung liegt damit die Aufgabe zu Grunde eine verbesserte Verschlussvorrichtung bereit zu stellen, die ein einfaches Schließen der Verschlussvorrichtung durch Drehung eines Verschlussteils relativ zu einem anderen Verschlussteil erlaubt und bei der gleichzeitig in einer Schließstellung ein unerwünschtes Öffnen der Verschlussvorrichtung in einfacher Weise verhindert ist.

Diese Aufgabe wird mit einer Verschlussvorrichtung nach dem Anspruch 1 gelöst.

Erfindungsgemäß weisen die Verbindungsbereiche der beiden Verschlussteile jeweils mindestens eine Gleitfläche und mindestens eine Sperrfläche derart auf, dass
- die Verschlussteile entlang ihrer Gleitflächen relativ zueinander um die Verbindungsachse in die Schließstellung der Verschlussvorrichtung drehbar sind, wenn an den beiden Verschlussteilen eine (resultierende) Kraft entlang der Verbindungsachse in eine erste Belastungsrichtung angreift, und
- eine Drehung der beiden Verschlussteile relativ zueinander um die Verbindungsachse durch die aneinander liegenden Sperrflächen gesperrt ist, wenn an den beiden Verschlussteilen eine (resultierende) Kraft entlang der Verbindungsachse in eine zweite, zu der ersten Belastungsrichtung entgegengesetzte Belastungsrichtung angreift.

Um sicherzustellen, dass entweder die Gleitflächen oder die Sperrflächen der beiden Verschlussteile aneinander anliegen ist ferner vorgesehen, dass die Verschlussteile in der Schließstellung bezogen auf die Verbindungsachse axial der relativ zueinander um ein Spiel verlagerbar sind. Derart kann eine Sperrung über die aneinander anliegenden Sperrflächen gelöst werden und es können die Gleitflächen miteinander in Kontakt gebracht werden, indem die beiden Verschlussteile axial relativ zueinander verlagert werden.

Dabei ist eine Gleitfläche und/oder eine Sperrfläche an einem Gewindeabschnitt des jeweiligen Verbindungsbereichs ausgebildet. Der jeweilige Verbindungsbereich weist somit einen Abschnitt auf, an dem eine Gleitfläche und/oder eine Sperrfläche ausgebildet ist und der entlang eines Teils einer virtuellen Schraubenlinie um eine Erstreckungsachse des Verbindungsbereichs verläuft.

Ein Gewindeabschnitt mit einer Gleitfläche ist derart ausgebildet, dass über aneinander anliegende Gleitflächen der Verschlussteile die Verschlussteile relativ zueinander in die Schließstellung gedreht werden, wenn die beiden Verschlussteile durch äußere Kräfte entlang der Verbindungsachse aufeinander zugedrückt werden. Hierunter wird verstanden, dass kein Drehmoment an den beiden Verschlussteilen angreifen muss, um sie in die Schließstellung zu überführen. Vielmehr sind die Gleitflächen so ausgebildet, dass den Verschlussteilen über die Gleitflächen eine Drehung relativ zueinander in Richtung der Schließstellung aufgezwungen wird, wenn die Verschlussteile, z.B. manuell durch einen Benutzer, aufeinander zu gedrückt werden, nachdem die beiden Verschlussteile aneinander angesetzt wurden. Bei einer Verlagerung der beiden Versschlussteile relativ zueinander kann selbstverständlich auch eines der Verschlussteile festgehalten sein und das andere der beiden Verschlussteile um die Verbindungsachse gedreht werden.

Weiterhin ist vorgesehen, dass mindestens ein Hilfsverschlussmittel eine Kraft ausübt, die die Verlagerung der beiden Verschlussteile in Richtung der Schließstellung unterstützt. Das mindestens ein Hilfsverschlussmittel umfasst wenigstens einen Magneten, der eine Magnetkraft ausübt, die ein Drücken der beiden Verschlussteile aufeinander zu unterstützt. Hierbei werden die beiden Verschlussteile durch eine Magnetkraft aufeinander zu angezogen, um ein Eindrehen des einen Verschlussteils in das andere Verschlussteil zu erleichtern.

Über eine resultierende Kraft in die erste Belastungsrichtung können die beiden Verschlussteile entlang der Verbindungsachse aufeinander zu gedrückt oder voneinander weg gezogen werden. In diesem ersten Belastungszustand wird eine Drehung der beiden Verschlussteile relativ zueinander gestattet. In einem anderen Belastungszustand, wenn eine resultierende Kraft in die entgegengesetzte Belastungsrichtung wirkt, sind die beiden Verschlussteile über ihre Sperrflächen gegen eine Drehung gesperrt.

Mit der erfindungsgemäßen Lösung wird erreicht, dass einerseits ein Verschließen der Verschlussvorrichtung relativ einfach möglich ist, indem die beiden Verschlussteile entlang der Gleitflächen relativ zueinander gedreht werden. Gleichzeitig ist durch zusätzlich vorgesehene Sperrflächen sichergestellt, dass die beiden Verschlussteile in einer Schließstellung nicht mehr zueinander verdreht werden können, wenn die beiden Verschlussteile in der Schließstellung belastet werden. Über die Sperrflächen wird somit die Schließstellung gesichert, und ein Öffnen der Verschlussvorrichtung verhindert, wenn die Verschlussvorrichtung in eine Belastungsrichtung belastet wird, die zu der Belastungsrichtung entgegengesetzt ist, in die die Verschlussteile beim Eindrehen belastet werden. Beispielweise kann vorgesehen sein, dass über die Sperrflächen ein Drehen der Verschlussteile relativ zueinander gesperrt ist, wenn diese auf Zug belastet werden. Unter einer Zugbelastung wird hierbei insbesondere verstanden, dass an den Verschlussteilen Kräfte angreifen, durch die die beiden Verschlussteile voneinander weggezogen werden und infolge derer die beiden Verschlussteile ohne Arretierung über ihre Verbindungsbereiche entlang der Verbindungsachse voneinander entfernt würden.

Durch das eingebaute Spiel zwischen den beiden Verschlussteilen in der Schließstellung ist ein Wechsel zwischen zwei Relativpositionen der beiden Verschlussteile zueinander möglich. So kann beispielsweise durch Drücken der beiden Verschlussteile aufeinander zu und der damit verbundenen Überwindung des Spiels der Kontakt zwischen den Sperrflächen gelöst werden, sodass diese ein Verdrehung der beiden Verschlussteile relativ zueinander nicht mehr sperren.

Eine Gleitfläche kann dabei grundsätzlich an einem Gewindeabschnitt und eine Sperrfläche an einem anderen Gewindeabschnitt des jeweiligen Verschlussteils ausgebildet sein, so dass an einem Gewindeabschnitt jeweils nur eine Gleitfläche oder eine Sperrfläche vorgesehen ist.

Vorzugsweise ist an einem Gewindeabschnitt sowohl eine Gleitfläche als auch eine Sperrfläche ausgebildet, und zwar an sich gegenüberliegenden Seiten des Gewindeabschnitts. Dementsprechend ist eine erste Seite des Gewindeabschnitts für das erleichterte Schließen und Öffnen der Verschlussvorrichtung über die Gleitflächen vorgesehen, während die andere, zweite Seite desselben Gewindeabschnitts für die Sperrung einer Drehung der beiden Verschlussteile in der Schließstellung und damit die Arretierung der Schließstellung vorgesehen ist.

Grundsätzlich können mehrere (mindestens zwei) in einer Umfangsrichtung um die jeweilige Erstreckungsachse (und damit im verbundenen Zustand der beiden Verschlussteile in einer Umfangsrichtung um die Verbindungsachse) aufeinanderfolgende Gewindeabschnitte vorgesehen sein, um die beiden Verschlussteile nach Art einer Schraubverbindung miteinander zu verbinden. Dabei wird über den axialen Abstand der Gewindeabschnitte zueinander das Spiel definiert, um die die beiden Verschlussteile in der Schließstellung axial relativ zueinander verlagerbar sind, um einerseits die Gleitflächen oder anderseits die Sperrflächen miteinander in Kontakt zu bringen.

Um über die Gleitflächen eine selbstständige Drehung der Verschlussteile relativ zueinander in die Schließstellung zu erreichen, wenn die Verschlussteile aufeinander zugedrückt werden, ohne dass von außen ein Drehmoment aufgebracht werden muss, kann beispielsweise die Steigung eines Gewindeabschnitts mit einer Gleitfläche größer als 10°, vorzugsweise im Bereich von 10° bis 50° und insbesondere im Bereich von 15° bis 45° gewählt sein.

Alternativ oder ergänzend kann die Gleitfläche eine glatte Oberfläche aufweisen, um das Entlanggleiten der Gleitflächen aufeinander zu verbessern und insbesondere das Eindrehen in die Schließstellung zu erleichtern. Unter einer glatten Oberfläche wird beispielsweise eine Oberfläche verstanden, die eine mittlere Rauheit von unter 1,2µm aufweist.

Zur Sperrung gegen eine Drehung in der Schließstellung können die Sperrflächen reibschlüssig und/oder formschlüssig aneinander anliegen. Beispielsweise können hierfür die Sperrflächen mit einer aufgerauten Oberfläche oder einem Reibbelag versehen sein, um eine reibschlüssige Verbindung zwischen den Sperrflächen zu gewährleisten, wenn die Verschlussteile auf Zug belastet werden. Alternativ oder ergänzend kann ein Formschluss über die Sperrflächen realisiert sein, beispielsweise über eine Verzahnung. So können die Sperrflächen miteinander über eine Verzahnung miteinander in Eingriff bringbar sein, um eine Drehung der beiden Verschlussteile insbesondere formschlüssig relativ zueinander zusperren. Für eine solche Verzahnung können beispielsweise beide Verschlussteilen Raststege und Rastöffnungen für die Sperrflächen ausbilden, die wechselseitig mit einander in Eingriff stehen, wenn die Verschlussteile in der Schließstellung vorliegen und die Verschlussvorrichtung mit einer Kraft (entgegensetzt zu der Belastungsrichtung für das Eindrehen des ersten Verschlussteils) belastet wird, die die Tendenz hat, die beiden Verschlussteile voneinander zu trennen.

In einem Ausführungsbeispiel weist die Verschlussvorrichtung
- an einem ersten Gewindeabschnitt wenigstens eines Verschlussteils mindestens eine Gleitfläche und mindestens eine Sperrfläche an sich gegenüberliegenden Seiten des jeweiligen Gewindeabschnitts auf und
- an einem zweiten Gewindeabschnitt dieses Verschlussteils, der in Umfangsrichtung auf den ersten Gewindeabschnitt folgt, lediglich eine Gleitfläche.

In einer solchen Ausführungsvariante sind somit zwei unterschiedliche Typen von Gewindeabschnitten an einem Verschlussteil ausgebildet, einerseits ein erster Typ Gewindeabschnitt mit mindestens einer Sperrfläche oder mehreren Sperrflächen und mindestens einer gegenüberliegenden Gleitfläche und andererseits ein zweiter Typ Gewindeabschnitt, der ausschließlich eine Gleitfläche ausbildet. Dabei können die beiden ersten und zweiten Gewindeabschnitte unmittelbar benachbart entlang einer Schraubenlinie um die Verbindungsachse angeordnet sein, so dass sich der zweite Gewindeabschnitt direkt - vorzugsweise entlang Drehrichtung, in die das zweite Verschlussteil zum Öffnen der Verschlussvorrichtung zu drehen ist - an den ersten Gewindeabschnitt anschließt.

Bevorzugt sind jeweils mehrere (entlang einer Umfangsrichtung) räumlich voneinander getrennte Paare erster und zweiter Gewindeabschnitte an den Verschlussteilen vorgesehen,
Beispielsweise können Raststege Teil des ersten Gewindeabschnitts sein und an einer ersten Seite Teile der Sperrflächen ausbilden und an einer gegenüberliegenden zweiten Seite jeweils eine Gleitfläche ausbilden. Für die Sperrung in der Schließstellung ist dann an jedem ersten Gewindeabschnitt der beiden Verschlussteile zwischen jeweils einem Paar von Raststegen eine Rastöffnung ausgebildet, in die ein Raststeg des jeweils anderen Verschlussteils formschlüssig eingreifen kann.

Grundsätzlich kann in einer derartigen Ausführungsvariante vorgesehen sein, dass die unterschiedlichen Typen von Gewindeabschnitten wechselseitig über ihre Gleitflächen beim Schließen der Verschlussvorrichtung aneinander entlang gleiten können. So würde beispielsweise ein erster mit Raststegen ausgebildeter Gewindeabschnitt des ersten Verschlussteils beim Bewegen in die Schließstellung abwechselnd a) an Gleitflächen eines ersten Gewindeabschnitts des zweiten Verschlussteils entlang gleiten, die an einer (Ober- oder Unter-) Seite von dessen Raststegen ausgebildet sind, und b) an einer Gleitfläche eines sich hieran anschließenden zweiten Gewindeabschnitts des zweiten Verschlussteils entlang gleiten, der - im Gegensatz zu dem ersten Gewindeabschnitt - auf seiner gegenüberliegenden (Unter- oder Ober-) Seite keine Sperrflächen definiert.

In einer alternativen Variante können aber das erste Verschlussteil mit seinen die Raststege aufweisenden ersten Gewindeabschnitten und das zweite Verschlussteil mit seinen die Raststege aufweisenden ersten Gewindeabschnitten auch derart ausgebildet und aufeinander abgestimmt sein, dass die Gleitflächen, die an den Raststegen des ersten Verschlussteils ausgebildet sind, beim Drehen in die Schließstellung nicht in Kontakt mit den Gleitflächen kommen, die an den Raststegen des zweiten Verschlussteils ausgebildet sind.. Die Raststege der ersten Gewindeabschnitte kommen in dieser Variante somit lediglich für die Sperrung in der Schließstellung in wechselseitigen Kontakt. Dies ist beispielsweise dadurch erreicht, dass die ersten und zweiten Gewindeabschnitte derart an den Verschlussteilen ausgebildet sind, dass die Verschlussteile bereits durch eine Drehung um einem vergleichsweise kleinen Drehwinkel in die Schließstellung gelangen, während der lediglich die zweiten Gewindeabschnitte aneinander gleiten können.

In einer Ausführungsvariante ist mindestens ein Vorspannelement vorgesehen, über das die beiden Verschlussteile in der Schließstellung in eine Sperrposition vorgespannt sind, in der die Sperrflächen sperrend aneinander anliegen. Ein derartiges Vorspannelement erzeugt somit eine Vorspannkraft, die einem Drücken der beiden Verschlussteile aufeinander zu entgegenwirkt und damit die Sperrflächen gegeneinander drückt oder zieht. Wird beispielsweise das eine (erste) Verschlussteil in einer Schließrichtung in das andere (zweite) Verschlussteil entlang der Verbindungsachse eingedreht und hierbei das eine Verschlussteil in Schließrichtung gedrückt, damit die Gleitflächen der beiden Verschlussteile aneinander anliegen, wirkt die Vorspannkraft des wenigstens einen Vorspannelements entgegengesetzt zu der Schließrichtung, so dass die Sperrflächen automatisch sperrend aneinander anliegen, sobald das eine (erste) Verschlussteil nicht mehr manuell in die Schließrichtung gedrückt wird.

Das Vorspannelement kann beispielsweise ein Federelement, wie z. B. eine Schraubenfeder, umfassen. Alternativ oder ergänzend ist die Verwendung einer Schaum- oder Luftdruckfeder denkbar. Des Weiteren kann das Vorspannelement einen Magneten umfassen, um über eine Magnetkraft eine Vorspannkraft zu erzeugen.

Es kann beispielsweise vorgesehen sein, dass in dem ersten Verschlussteil ein erster Magnet vorgesehen ist und in dem zweiten Verschlussteil ein zweiter Magnet vorgesehen ist und die beiden Magneten aneinander anziehen.

Grundsätzlich können Magnete innerhalb der Verschlussteile in einem (Kunststoff-) Material des jeweiligen Verschlussteils eingebettet oder eingesetzt und hieran fixiert sein. Die Magnete können hierbei beispielsweise scheibenförmig oder quaderförmig sein. Bei einer nicht punktsymmetrischen Geometrie des jeweiligen Magnets kann je nach Lage der beiden Verschlussteile zueinander ein magnetischer Rückdrehimpuls bewirkt werden.

In einer Ausführungsvariante weist die Verschlussvorrichtung ein erstes Verschlussteil mit wenigstens einem ersten Kontaktelement und ein zweites Verschlussteil mit wenigstens einem zweiten Kontaktelement auf, wobei die beiden Kontaktelemente in der Schließstellung elektrisch leitend miteinander in Kontakt stehen. Demgemäß kann über eine derartige Variante einer erfindungsgemäßen Verschlussvorrichtung ein Signal erzeugt werden, wenn die beiden Verschlussteile bestimmungsgemäß in ihrer Schließstellung vorliegen, und/oder es kann über die Kontaktelemente der Verschlussvorrichtung ein Signal übertragen werden. Ebenso ist es möglich, über die Kontaktelemente elektrischen Strom zu leiten und diese somit zur Übertragung einer elektrischen Leistung zu nutzen.

In einer hierauf basierenden Weiterbildung ist ein Kontaktelement an einem Verschlussteil beispielsweise durch einen elastisch gelagerten Kontaktstift und an dem anderen Verschlussteil durch eine Kontaktplatte gebildet. Der elastisch gelagerte und vorzugsweise einen (kreis-)zylindrischen Kontaktierungsabschnitt aufweisende Kontaktstift ist dabei bezogen auf die Verbindungsachse radial an seinem Verschlussteil verlagerbar, so dass der jeweilige Kontaktstift in der Schließstellung in Richtung auf die zugeordnete Kontaktelement an dem anderen Verschlussteil vorgespannt ist, aber der Kontaktstift das Eindrehen des jeweiligen Verschlussteils in das andere Verschlussteil nicht blockiert. In der bestimmungsgemäßen Schließstellung wird der Kontaktstift dann in radialer Richtung gegen die Kontaktplatte gedrückt, die an dem anderen Verschlussteil angeordnet ist.

Elektrisch leitfähige Kontaktelemente können aber beispielsweise auch durch an Stirnflächen der Verschlussteile angeordnete Federelemente gebildet sein.

Eine erfindungsgemäße Verschlussvorrichtung kann in unterschiedlicher Weise und insbesondere in unterschiedlichen Gebrauchsgegenständen Verwendung finden. Beispielsweise kann die Verschlussvorrichtung Teil einer Hundeleine, einer Schlauchkupplung, eines Kameraobjektivs oder eines Tragegriffs sein.

Im Übrigen sei noch angemerkt, dass ein Gewinde, über das die beiden Verschlussteile ineinander geschraubt werden können, selbstverständlich auch mehrgängig, insbesondere zweigängig oder viergängig sein kann. Ein Abstand der einzelnen Gewindegänge definiert dabei das vorgegebene Spiel, um die Verschlussteile in ihrer Schließstellung relativ zueinander axial verlagern zu können und entweder die Gleitflächen oder die Sperrflächen miteinander in Eingriff zu bringen. Bevorzugt ist der Abstand der Gewindegänge so gewählt, dass ein möglichst geringes Spiel vorhanden ist.

Grundsätzlich wird es als vorteilhaft erachtet, wenn die Größe des Spiels unter 0,5mm liegt, insbesondere in einem Bereich von 0,05 bis 0,4mm.

Weitere Vorteile und Merkmale der vorliegenden Erfindung werden bei der nachfolgenden Beschreibung von Ausführungsbeispielen anhand der Figuren deutlich werden.

Hierbei zeigen:
- Fig. 1A - 1E: ein erstes Beispiel einer Verschlussvorrichtung in unterschiedlichen Ansichten;
- Fig. 2A - 2C: ein Ausführungsbeispiel einer erfindungsgemäßen Verschlussvorrichtung in unterschiedlichen Ansichten mit gegenüber dem ersten Beispiel insbesondere geometrisch abgewandelten Verschlussteilen;
- Fig. 3A - 3F: in unterschiedlichen Ansichten eine Weiterbildung des ersten Beispiels mit einem Vorspannelement, um die beiden Verschlussteile in eine Sperrposition vorzuspannen;
- Fig. 4A - 4C: ein Ausführungsbeispiel einer erfindungsgemäßen Verschlussvorrichtung in unterschiedlichen Ansichten;
- Fig. 5A - 5C: ein erstes Verschlussteil der Verschlussvorrichtung der Fig. 4A - 4C in unterschiedlichen Ansichten;
- Fig. 6A - 6C: ein zweites Verschlussteil der Ausführungsvariante der Fig. 4A - 4C in unterschiedlichen Ansichten;
- Fig. 7A - 7B: ein Beispiel einer Verschlussvorrichtung, die beispielsweise als Schlauchkupplung verwendbar ist;
- Fig. 8A - 8B: ein Ausführungsbeispiel einer erfindungsgemäßen Verschlussvorrichtung als eine Weiterbildung des Beispiels der Fig. 7A -7B;
- Fig. 9A - 9D: eine Weiterbildung der Ausführungsvariante der Fig. 4A - 6C mit einem Blockiermittel in unterschiedlichen Ansichten;
- Fig. 10A - 10E: Ansichten eines weiteren Beispiels einer Verschlussvorrichtung, bei der die beiden Verschlussteile jeweils Sperr- und Gleitflächen an zueinander beabstandeten Raststegen eines ersten segmentierten Gewindeabschnitts und jeweils lediglich eine Gleitfläche an einem in Umfangsrichtung nachfolgenden zweiten längserstreckten Gewindeabschnitt ausbilden.

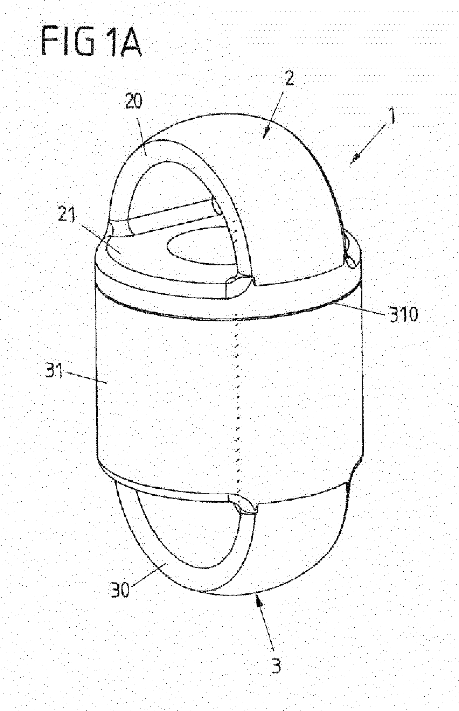

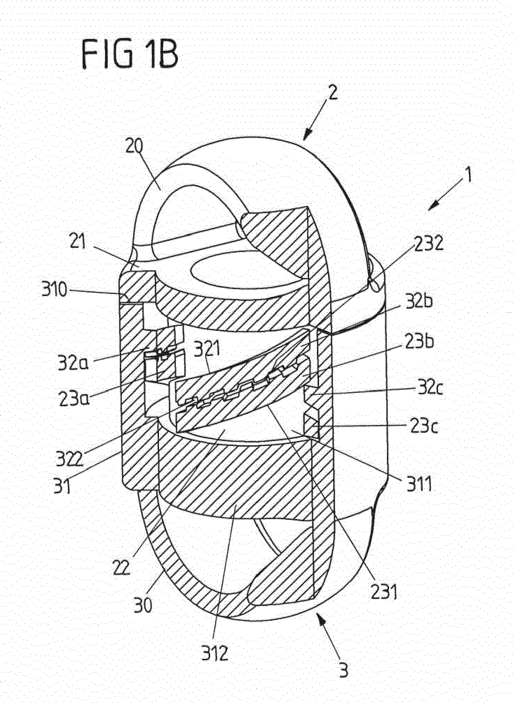

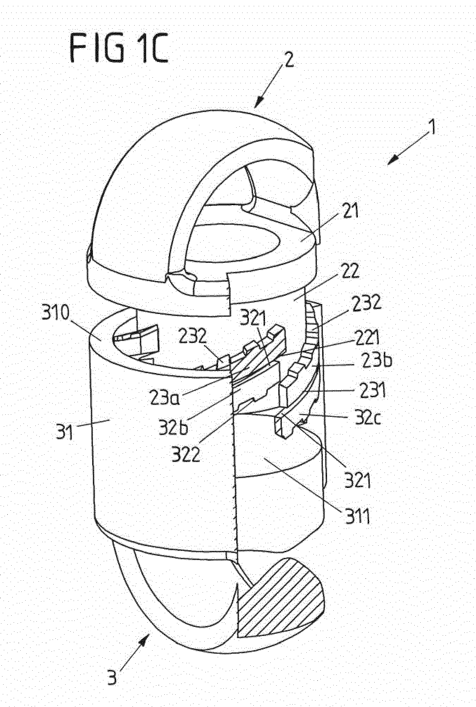

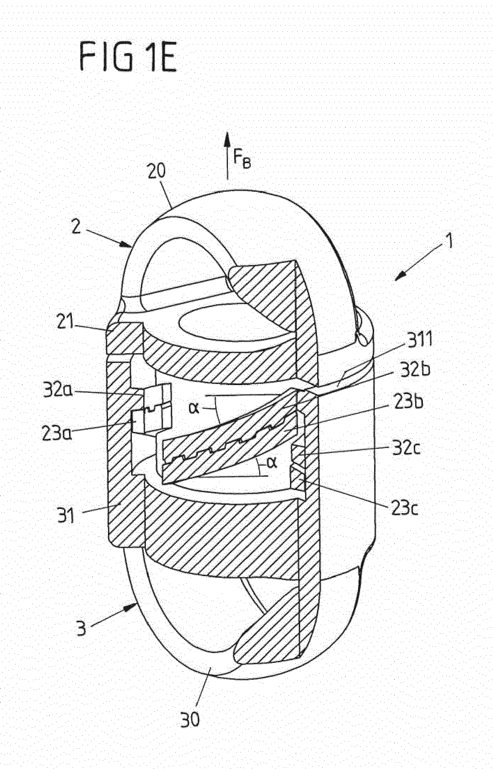

Die Fig. 1A - 1E zeigen in unterschiedlichen Ansichten und Stellungen zweier Verschlussteile 2 und 3 zueinander ein erstes Beispiel einer Verschlussvorrichtung 1, bei der ein erstes Verschlussteil 2 und ein zweites Verschlussteil 3 nach Art einer Schraubenverbindung miteinander verbunden und in einer Schließstellung gehalten werden können. Eine Schließstellung ist beispielsweise in den Fig. 1A und 1B dargestellt. Das erste Verschlussteil 2 ist hier bolzenartig ausgebildet und weist ein scheibenförmiges Kopfteil 21 auf, von dessen Unterseite sich ein Verbindungsbereich in Form eines kreiszylindrischen Hülsenabschnitts 22 weg erstreckt und an dessen Oberseite brückenartig ein gewölbter Griffabschnitt 20 ausgebildet ist. Das zweite Verschlussteil 3 wiederum weist einen teilweise hohlen, ebenfalls kreiszylindrischen Hülsenkörper 31 als Verbindungsbereich auf, der ebenfalls einen brückenartig erscheinenden gewölbten Griffabschnitt 30 ausbildet. Der Griffabschnitt 30 liegt dabei dem Griffabschnitt 20 des ersten Verschlussteils 2 entlang einer Längserstreckungsrichtung der Verschlussvorrichtung 1 und entlang einer Verbindungsachse A, entlang der die beiden Verschlussteile 2 und 3 ineinander gedreht werden, gegenüber.

An den Griffabschnitten 20 und 30 kann ein Benutzer angreifen, um die Verschlussvorrichtung 1 manuell zu schließen und zu öffnen. Alternativ oder ergänzend können hieran zusätzliche Komponenten befestigt sein, die über die Verschlussvorrichtung 1 miteinander gekoppelt werden sollen.

Um die beiden Verschlussteile 2 und 3 miteinander zu verbinden, kann der Hülsenabschnitt 22 des ersten Verschlussteils 2 entlang der Verbindungsachse A und unter Drehung des ersten Verschlussteils 2 in einen Hohlraum 311 des Hülsenkörpers 31 des zweiten Verschlussteils 3 eingedreht werden. Das erste Verschlussteil 2 kann hierbei soweit mit seinem Hülsenabschnitt 22 in den Hülsenkörper 31 des zweiten Verschlussteils 3 eingedreht werden, bis ein Auflagerand des Kopfteils 21 an einer kreisringförmigen Stirnfläche 310 des zweiten Verschlussteils 3 anliegt oder - bevorzugt - eine Stirnseite des Hülsenabschnitts 22 abseits des Kopfteils 21 an einem Basisteil 312 am Fuße des Hohlraums 311 zur Anlage kommt.

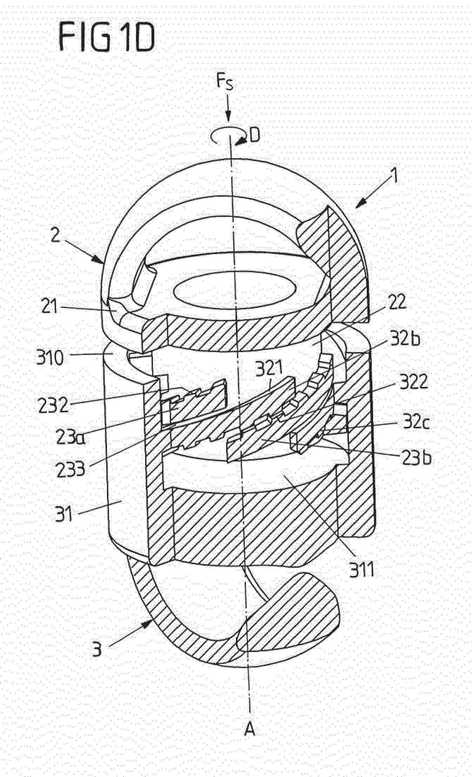

Das gezielte Eindrehen des Hülsenabschnitts 22 in den Hülsenkörper 31 in eine Drehrichtung D (vgl. Fig. 1D) wird hier über zwei Gewinde ermöglicht, die einerseits an dem Hülsenabschnitt 22 und andererseits an dem Hülsenkörper 31 ausgebildet sind. Ein Außengewinde des Hülsenabschnitts 22 wird dabei durch mehrere (vorliegend vier) in Umfangsrichtung an der Mantelfläche des Hülsenabschnitts 22 entlang aufeinander folgende und voneinander separierte Gewindeabschnitte gebildet, von denen Gewindeabschnitte 23a - 23c in den Schnittdarstellungen der Figuren 1B - 1E ersichtlich. Mit diesem unterbrochenen Außengewinde korrespondiert ein ebenfalls unterbrochenes Innengewinde des Hülsenkörpers 31. Dieses Innengewinde ist aus mehreren (vorliegend vier) in Umfangsrichtung entlang der Innenwandung des Hülsenkörpers 31 aufeinander folgenden und voneinander separierten Gewindeabschnitten gebildet, von denen Gewindeabschnitte 32a - 32c in den Schnittdarstellungen der Figuren 1B - 1E ersichtlich sind.

Jeder der Gewindeabschnitte 23a - 23c und 32a - 32c erstreckt sich entlang eines Teilabschnitts einer Schraubenlinie an dem Hülsenabschnitt 22 bzw. dem Hülsenkörper 31 entlang. Die Gewindeabschnitte 23a - 23c des Innengewindes des ersten Verschlussteils 2 stehen dabei bezogen auf die Verbindungsachse A radial an dem Hülsenabschnitt 22 in Richtung der Innenwandung des Hülsenkörpers 31 hervor. Die Gewindeabschnitte 32a - 32c des Außengewindes des zweiten Verschlussteils 3 wiederum stehen radial in Richtung auf die Mantelfläche des Hülsenabschnitts 22 an den Innenwandungen des Hülsenkörpers 31 hervor. Derart ist gewährleistet, dass die beiden Verschlussteile 2 und 3 an ihren Verbindungsbereichen in Form des Hülsenabschnitts 22 und des Hülsenkörpers 31 nahezu ausschließlich über die Gewindeabschnitte 23a - 23c und 32a - 32c miteinander in Kontakt stehen und hierüber etwaige entlang der Verbindungsachse A wirkenden Belastungen übertragen werden.

Jeder der Gewindeabschnitte 23a - 23c und 32a - 32c weist eine Sperrfläche 232 oder 322 sowie eine Gleitfläche 231 oder 321 auf. Eine Gleitfläche 231, 321 und eine Sperrfläche 232, 322 liegen dabei an in axialer Richtung von einander abgewandten Seiten des jeweiligen Gewindeabschnitts 23a - 23c oder 32a - 32c vor. So bildet beispielsweise ein Gewindeabschnitt 23a, 23b oder 23c des ersten Verschlussteils 2 jeweils eine Sperrfläche 232 an einer dem Kopfteil 21 zugewandten Oberseite und eine Gleitfläche 231 an einer gegenüberliegenden Unterseite aus.

Die Gleitflächen 231 und 321 und Sperrflächen 232 und 322 sind an den beiden Verschlussteilen 2 und 3 so ausgebildet, dass beim Eindrehen des ersten Verschlussteils 2 die Verschlussteile 2 und 3 entlang ihrer Gleitflächen 231 und 321 relativ zueinander um die Verbindungsachse A drehbar sind, wenn die Verschlussteile 2 und 3 entlang der Verbindungsachse A aufeinander zu gedrückt werden, also beispielsweise das zweite Verschlussteil 3 gehalten ist und das erste Verschlussteil 2 mit einer Schließkraft Fs in Richtung des zweiten Verschlussteils 3 gedrückt wird. Hierbei liegen die Gleitflächen 231 und 321 dann aneinander an. Eine Steigung α der einzelnen Gewindeabschnitte 23a - 23c und 32a - 32c ist vorliegend so groß gewählt und die Gleitflächen sind mit einer derart glatten Oberfläche versehen, dass die Verschlussteile 2 und 3 bei Aufbringen der Schließkraft Fs entlang der Verbindungsachse A selbsttätig um die Verbindungsachse A ineinander drehen. So kann beispielsweise beim Eindrehen ein Gewindeabschnitt 23b mit seiner Gleitfläche 231 an einer Gleitfläche 321 eines (darunter liegenden) Gewindeabschnitts 32c des zweiten Verschlussteils 3 entlang gleiten. Die Haftreibung an den Gleitflächen 231, 321 der Gewindeabschnitte 23a - 23c und 32a - 32c der Verschlussteile 2 und 3 ist so gering, dass die Verschlussteile 2 und 3 allein aufgrund einer vergleichweise geringen, manuell aufgebrachten und entlang der Verbindungsachse A wirkenden Schließkraft Fs über die Gleitflächen 231, 321 geführt relativ zueinander gedreht werden, ohne dass ein Drehmoment auf die Verschlussteile 2 und 3 aufgebracht werden muss.

Wurden die beiden Verschlussteile 2 und 3 vollständig einander gedreht, ist eine Schließstellung der beiden Verschlussteile 2 und 3 gegeben. In dieser Schließstellung können einander gegenüberliegende Sperrflächen 232 und 322 bei einer (Zug-)Belastung F_{B}, die die beiden Verschlussteile 2 und 3 entlang der Dreh- bzw. Verbindungsachse A entgegengesetzt zu der ursprünglichen Schließrichtung relativ zueinander verlagert, miteinander in Eingriff treten. Hierfür weisen die Sperrflächen 232 und 322 jeweils Rastzähne auf, über die gegenüberliegende Gewindeabschnitte, z. B. ein Gewindeabschnitt 23b des ersten Verschlussteils 2 und ein (darüber liegender) Gewindeabschnitt 32b des zweiten Verschlussteils 3, in der Schließstellung miteinander verriegeln können und somit eine Verdrehung der beiden Verschlussteile 2 und 3 relativ zueinander sperren.

Zwischen den beiden Verschlussteilen 2 und 3 ist in der Schließstellung ein Spiel vorgesehen, sodass die beiden Verschlussteile 2 und 3 entlang der Verbindungsachse A axial zueinander verlagerbar sind. Derart kann beispielsweise ein Gewindeabschnitt 23b des ersten Verschlussteils 2 mit seiner Gleitfläche 231 beim Eindrehen des Verschlussteils 2 an einer Gleitfläche 321 eines in Schließrichtung benachbarten Gewindeabschnitt 32c des zweiten Verschlussteils 3 entlanggleiten. Gleichzeitig kann aber das erste Verschlussteil 2 auch entgegengesetzt zur Schließrichtung axial relativ zu dem zweiten Verschlussteil 3 verlagert werden, um denselben Gewindeabschnitt 23b über seine verzahnte Sperrfläche 232 mit der Sperrfläche 322 eines Gewindeabschnitts 32b sperrend in Eingriff treten zu lassen, der zu dem Gewindeabschnitt 23b entgegen der Schließrichtung benachbart ist. Auf diese Weise sind die beiden Verschlussteile 2 und 3 an einer Verdrehung relativ zueinander gehindert und die Verschlussvorrichtung 2 gegen ein Öffnen gesperrt, solange an den Verschlussteilen 2, 3 eine Zugbelastung anliegt, beispielsweise über an den Griffabschnitten 20, 30 festgelegte Gurt-, Seil- oder Leinenabschnitte. Die Arretierung der beiden Verschlussteile 2 und 3 erfolgt dabei innerhalb des durch den Hülsenkörper 31 definierten Hohlraums 311, der in der Schließstellung entlang der Verbindungsachse A durch ein Basisteil 312 des zweiten Verschlussteils 3 und gegenüberliegend hierzu durch das Kopfteil 21 brandet ist.

Im Ergebnis kann somit die dargestellte Verschlussvorrichtung 1 in einfacher Weise geschlossen werden, indem die beiden Verschlussteile 2 und 3 entlang ihrer Gleitflächen durch Druck entlang der Verbindungachse A ineinander gedreht werden. Bei einer anschließenden Zugbelastung verriegeln die beiden Verschlussteile 2 und 3 über die aneinander anliegenden Sperrflächen 231 und 321 miteinander, sodass eine Drehung der beiden Verschlussteile 2 und 3 relativ zueinander gesperrt und damit ein Öffnen der Verschlussvorrichtung 1 verhindert ist.

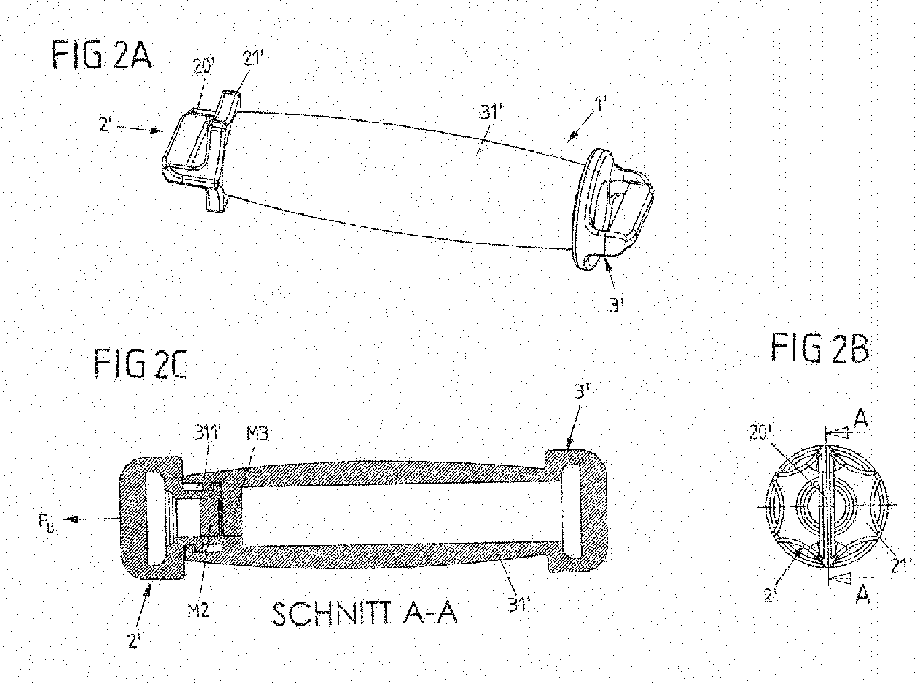

Mit den Fig. 2A, 2B und 2C wird ein Ausführungsbeispiel einer Verschlussvorrichtung 1' dargestellt bei der im Unterschied zu dem ersten Beispiel der Fig. 1A bis 1E ein zweites Verschlussteil 3' verlängert ausgeführt ist und zusätzlich Hilfsverschlussmittel in Form von Magneten M2 und M3 vorgesehen sind, um das Schließen der Verschlussverrichtung 1' zu unterstützen und nahezu selbsttätig erfolgen zu lassen, nachdem ein erstes Verschlussteil 2' an das zweite Verschlussteil 3' angesetzt wurde.

Das erste Verschlussteil 2' weist auch hier einen Griffabschnitt 20' und ein Kopfteil 21' auf. Das Kopfteil 21' verschließt in der Schließstellung erneut einen Hohlraum 311' innerhalb dessen die Verbindung der beiden Verschlussteile 2' und 3' über Gewindeabschnitte mit Gleitflächen und Sperrflächen entsprechend dem Beispiel der Fig. 1A bis 1E erfolgt. Der Hohlraum 311' nimmt hier nur einen Bruchteil des Volumens des Hülsenkörpers 31' ein.

Zur Unterstützung des Schließens der Verschlussvorrichtung 1' weist jedes Verschlussteil 2', 3' hier einen Magneten M2 oder M3 auf. Die beiden Magneten M2 und M3 ziehen einander an und sind vorliegend im Bereich der in der Schließstellung aneinander angrenzenden Stirnseiten des ersten Verschlussteils 2' und zweiten Verschlussteils 3' angeordnet. Bei entsprechender Steigung der mit den Gleitflächen und Sperrflächen ausgebildeten Gewindeabschnitten und einer ausreichend glatten Oberfläche der Gleitflächen wird das erste Verschlussteil 2' beim Ansetzen an den Hohlraum 311' durch die Magnete M2, M3 entlang einer Verbindungsachse in Schließrichtung auf das zweite Verschlussteil 3' zugezogen und hierbei selbsttätig um die Verbindungsachse entlang der Gleitflächen in die Schließstellung gedreht. Greift in der Schließstellung eine Zugbelastung F_{B} an den Verschlussteil 2' und 3' an, die die Verschlussteile 2', 3' entgegen der Schließrichtung relativ zueinander verlagert, treten die Sperrflächen miteinander in Kontakt und sperren die beiden Verschlussteil 2', 3' gegen eine Drehung relativ zueinander um die Verbindungsachse.

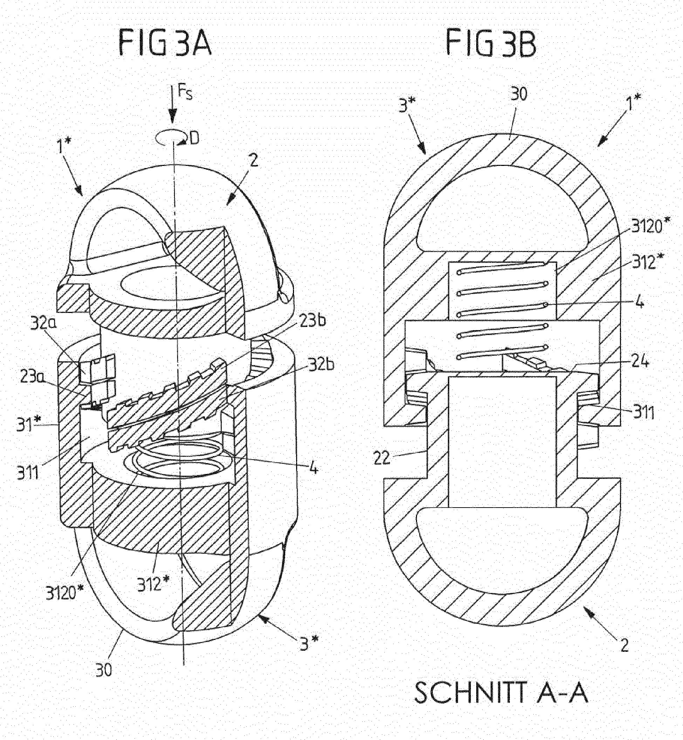

Mit den Fig. 3A bis 3F wird eine Weiterbildung des Beispiels der Fig. 1A bis 1E veranschaulicht. Die hierin dargestellt Verschlussvorrichtung 1* weist ein gegenüber dem Beispiel der Fig. 1A bis 1E verändertes zweites Verschlussteil 3* auf. Das erste Verschlussteil 2 ist übereinstimmend ausgebildet. Zusätzlich ist ein Federelement 4 als Vorspannelement - hier in Form einer Schraubenfeder - vorgesehen, um die beiden Verschlussteile 2 und 3* in der Schließstellung in eine Sperrposition vorzuspannen, in der die Sperrflächen 231, 322 der beiden Verschlussteile 2, 3* sperrend aneinander anliegen. Das Federelement 4 ist hierbei so angeordnet, dass es eine Federkraft F_{F} erzeugt, die einer Verlagerung der beiden Verschlussteile 2, 3* aufeinander zu entgegenwirkt und damit entgegengesetzt zur Schließrichtung wirkt.

Das Federelement 4 ist hierbei in einer zentralen Aufnahme 3120* in einem Basisteil 312* an dem Hülsenkörper 31* des zweiten Verschlussteils 3* gelagert. Das Federelement 4 stützt sich an den Basisteil 312* und an einer Stirnseite 24 des ersten Verschlussteils 2 ab, wenn das Verschlussteil 2 an das zweite Verschlussteil 3* angesetzt wurde.

Über das Federelement 4, das beim Eindrehen des ersten Verschlussteils 2 in den Hohlraum 311 des Hülsenkörpers 31* komprimiert werden muss, wird erreicht, dass die Sperrflächen 232 und 322 der beiden Verschlussteile 2, 3* automatisch miteinander in Eingriff gelangen, sobald das erste Verschlussteil 2 zumindest geringfügig in das zweite Verschlussteil 3* eingedreht wurde und an der Verschlussvorrichtung 1* keine Schließkraft Fs mehr angreift, die die beiden Verschlussteile 2, 3* aufeinander zudrückt. Hierdurch sind die beiden Verschlussteile 2 und 3* auch außerhalb der vollständig geschlossenen Stellung der Verschlussvorrichtung 1* durch die Anlage der Sperrflächen 232 und 322 aneinander arretierbar und gegen eine Verdrehung relativ zueinander sperrbar. Unabhängig von dem Anliegen einer Zugbelastung F_{B} ist hier somit erreicht, dass die Verschlussteile 2 und 3* nicht nur in einer (End)Schließstellung, in der die beiden Verschlussteile 2, 3* unter Abzug des Spiels einander maximal angenährt sind, arretiert werden, sondern auch in definierten Zwischenstellungen.

Bei dem in den Fig. 3A bis 3F dargestellten Beispiel wird über das Federelement 4 erreicht, dass die beiden Verschlussteile 2 und 3* derart auseinander gedrückt werden, dass die Sperrflächen 232 und 322 der einzelnen Gewindeabschnitte sperrend aneinander anliegen, sobald ein einzelner Zahn einer Sperrfläche 232 des einzudrehenden ersten Verschlussteiles 2 mit einer verzahnten Sperrfläche 322 des anderen, zweiten Verschlussteil 3* formschlüssig in Eingriff gebracht werden kann. Werden anstelle verzahnter Sperrflächen 232, 322 reibschlüssige Kontakte zwischen den Sperrflächen vorgesehen, ist nicht nur eine stufige, sondern auch eine stufenlose Arretierung in den einzelnen Zwischenstellungen möglich.

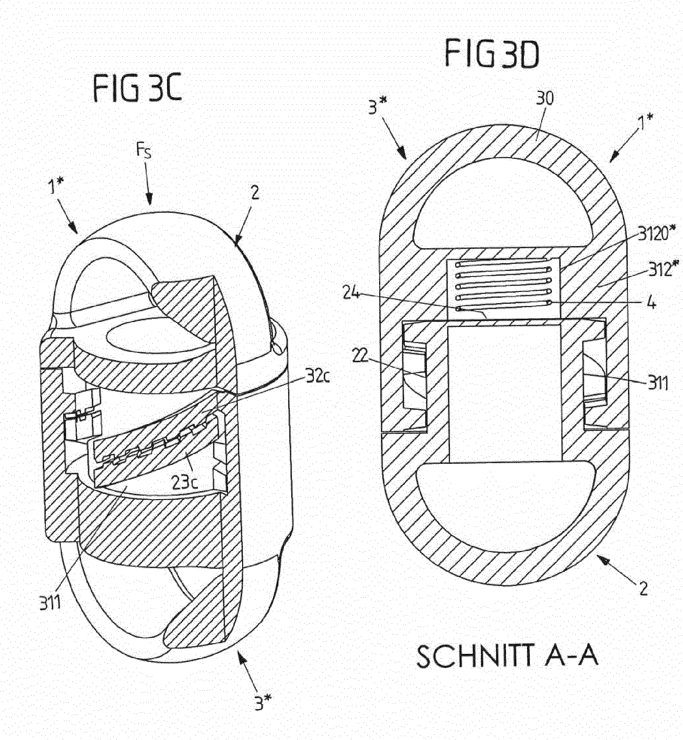

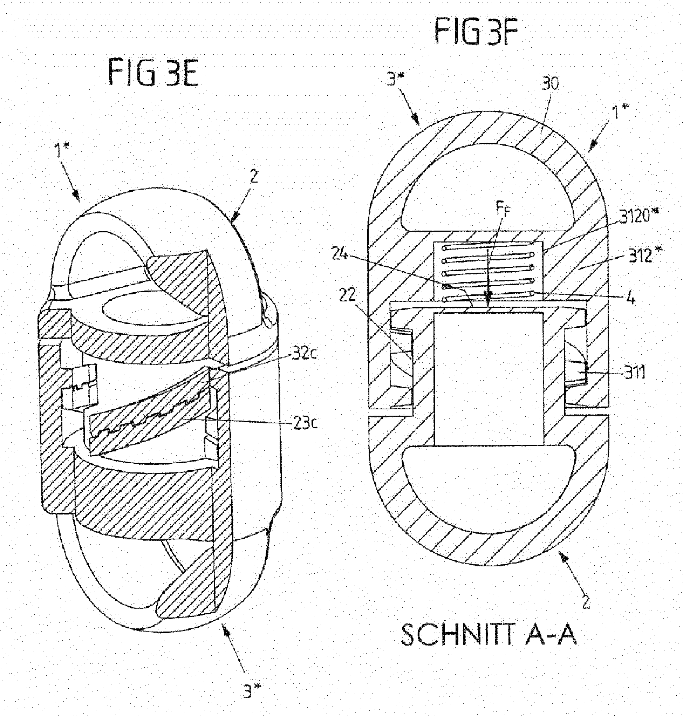

Die Fig. 3A und 3B zeigen dabei in unterschiedlichen Ansichten zunächst eine Stellung der beiden Verschlussteile 2 und 3* relativ zueinander, bei der das erste Verschlussteil 2 grade erst an das zweite Verschlussteil 3* angesetzt und sein Hülsenabschnitt 22 in den Hohlraum 311 eingesteckt wurde. Die Fig. 3C und 3D zeigen die beiden Verschlussteile 2 und 3* vollständig ineinander gedreht, wobei die beiden Verschlussteile 2 und 3* durch die Schließkraft Fs aufeinander zugedrückt werden, sodass die Sperrflächen 232 und 322 nicht formschlüssig miteinander verbunden sind und das Federelement 4 maximal komprimiert ist. In den Fig. 3E und 3F ist dann die Schließstellung dargestellt, in der die Sperrflächen 232, 322 infolge der Federkraft F_{F} sperrend aneinander anliegen.

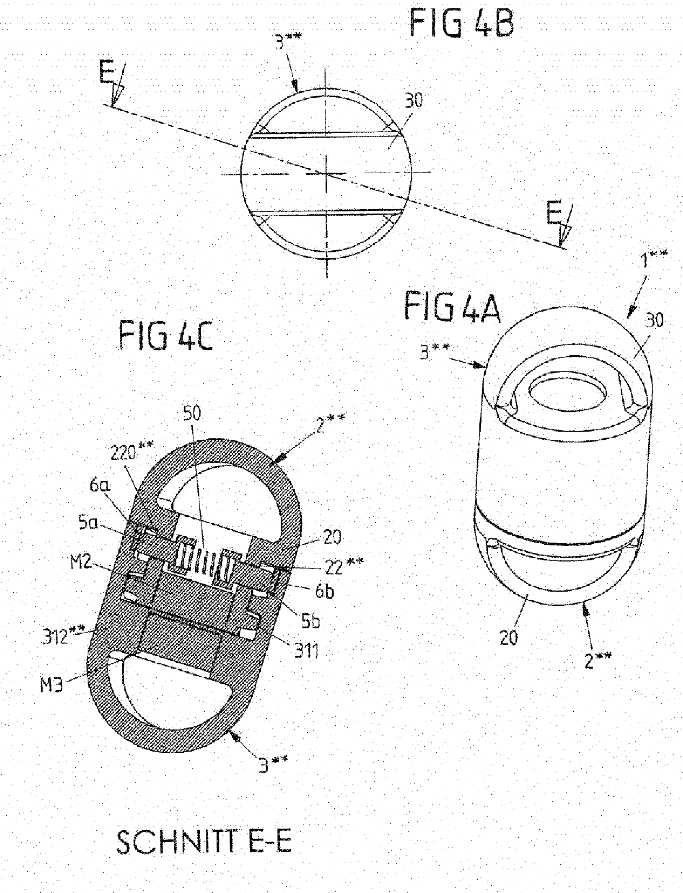

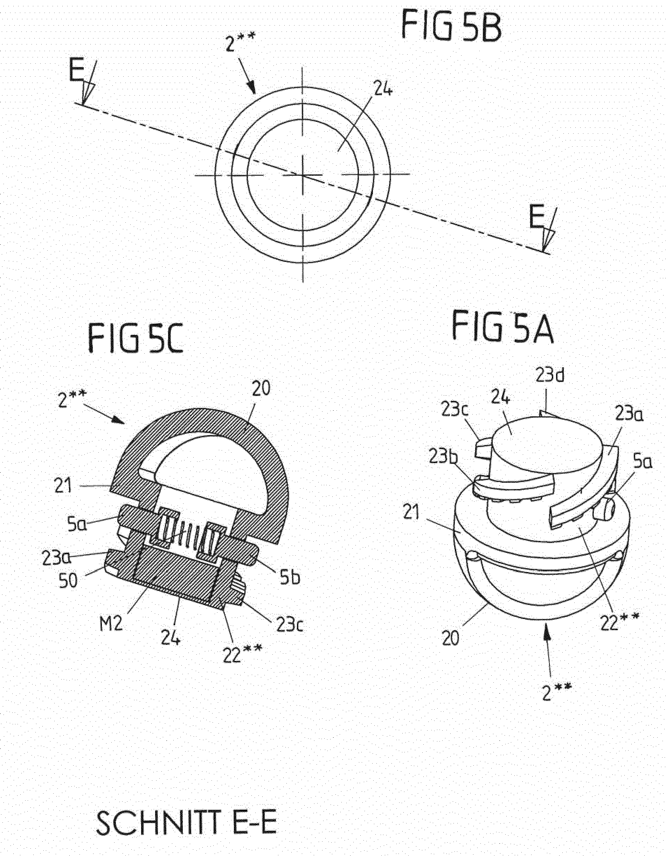

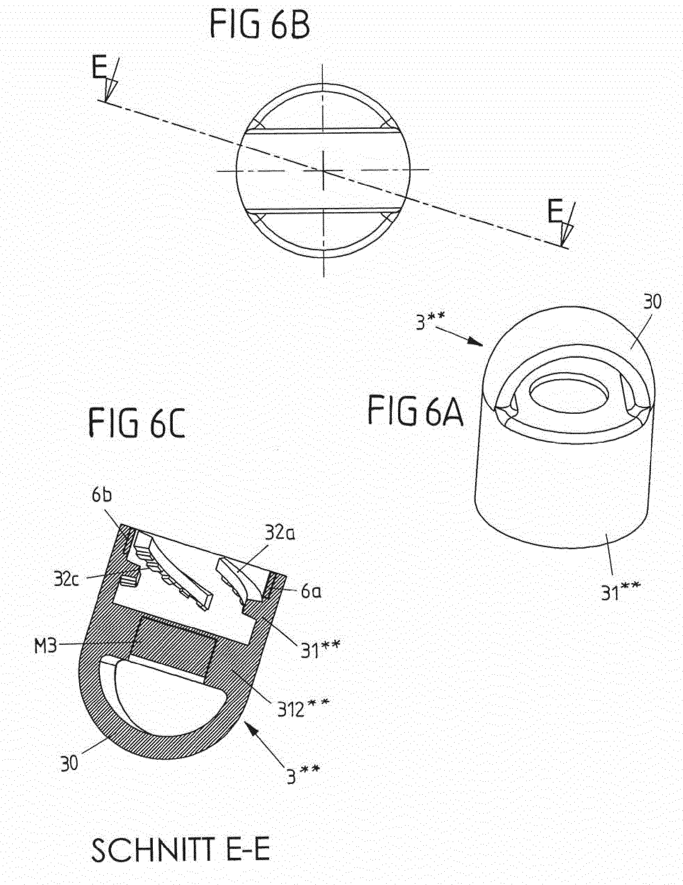

Mit den in den Fig. 4A bis 4C, 5A bis 5C und 6A bis 6C dargestellten Verschlussvorrichtungen wird eine weitere mögliche Weiterbildung des Beispiels der Fig. 1A bis 1C veranschaulicht, bei der eine Verschlussvorrichtung 1** Kontaktelemente 5a, 6a, 5b, 6b aufweist, die in einer Schließstellung elektrisch leitend miteinander verbunden sind. In den Fig. 4A bis 4C ist in unterschiedlichen Ansichten die Verschlussvorrichtung 1** mit ineinander gedrehten Verschlussteilen 2**, 3** dargestellt. Die Fig. 5A bis 5C zeigen das erste Verschlussteil 2** einzeln in unterschiedlichen Ansichten. Die Fig. 6A bis 6C zeigen wiederum das zweite Verschlussteil 3*** in unterschiedlichen Ansichten.

In Übereinstimmung mit den Beispielen der Fig. 1A bis 1E und 3A bis 3F ist das erste Verschlussteil 2** auch hier wieder bolzenartig ausgebildet und kann in einen Hülsenkörper 31** des zweiten Verschlussteils 3** unter Druckbeaufschlagung entlang von Gleitflächen 231, 321 eines Innen- und Außengewindes eingedreht und über Sperrflächen 233, 232 der Innen- und Außengewinde an dem zweiten Verschlussteil 3** gegen eine Drehung gesperrt werden. In Übereinstimmung mit dem Ausführungsbeispiel der Fig. 2A bis 2C sind an den beiden Verschlussteilen 2** und 3*** Magnete M2, M3 vorgesehen, um das selbsttätige Ineinanderdrehen der beiden Verschlussteile 2** und 3*** und damit das selbsttätige Schließen der Verschlussvorrichtung 1** zu unterstützen. Die Magnete M2, M3 sind hierbei in einem Basisteil 312** des Hülsenkörpers 31** bzw. am Ende des hohlzylindrischen Hülsenabschnitts 22** des ersten Verschlussteils 2** angeordnet und beispielsweise in das (Kunststoff-) Material des jeweiligen Verschlussteils 2**, 3** eingebettet.

Weiterhin sind an der Innenwandung des Hülsenkörpers 31** nahe der Öffnung, über die der Hülsenkörper 22** des ersten Verschlussteils 2** in den Hohlraum 311 eingeführt wird, Kontaktplatten 6a, 6b aus einem elektrisch leitfähigen Material angeordnet. Diesen Kontaktplatten 6a, 6b sind zwei Kontaktstifte 5a, 5b ersten Verschlussteils 2** zugeordnet. Die beiden Kontaktstifte 6a, 6b sind an dem Hülsenkörper 22** bezogen auf die Verbindungsachse radial elastisch verlagerbar gelagert und stehen an der Mantelfläche des Hülsenabschnitts 22** radial hervor. Über ein innerhalb des Hülsenabschnitts 22** untergebrachtes Vorspannmittel 50 - hier beispielsweise in Form einer Schraubenfeder - sind die beiden Kontaktstifte 5a, 5b gegeneinander vorgespannt, sodass die Enden der Kontaktstifte 5a, 5b aus der Mantelfläche des Hülsenabschnitts 22** herausgedrückt werden. Hierdurch ist ein Kontakt der Kontaktstifte 5a, 5b mit den Kontaktblättern 6a, 6b sichergestellt, sobald die beiden Verschlussteile 2** und 3*** ausreichend weit ineinander gedreht wurden und in der Schließstellung vorliegen, in der der Hohlraum 311 durch das Kopfteil 21 des ersten Verschlussteils 2** abgedeckt ist. Derart kann in der gegen eine Verdrehung gesicherten Schließstellung der beiden Verschlussteile 2** und 3*** mittels der einander kontaktierenden Kontaktstifte 5a, 5b und Kontaktplatten 6a, 6b ein Signal erzeugt werden, dass das Einnehmen der Schließstellung anzeigt. Alternativ oder ergänzend kann über die elektrisch leitfähigen Kontaktstifte 5a, 5b und 6a, 6b ein Signal übertragen werden, beispielsweise von einer an dem ersten Verschlussteil 2** anliegenden Signalleitung zu einer an dem zweiten Verschlussteil 3** anliegenden Signalleitung.

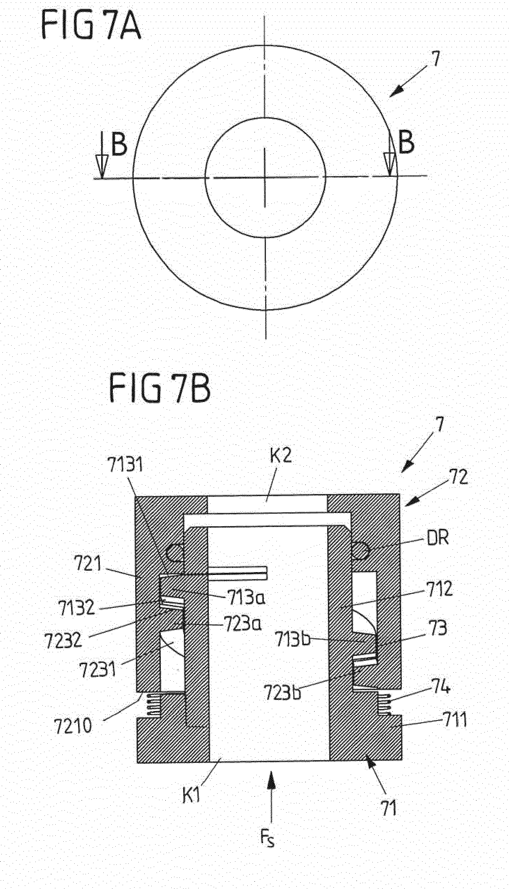

Die Fig. 7A und 7B zeigen ein weiteres Beispiel einer Verschlussvorrichtung 7, die beispielsweise als Teil einer Schlauchkupplung eingesetzt werden kann. Hierbei wird über ineinander gedrehte Verschlussteile 71, 72 ein Kanalstück K1 des ersten Verschlussteils 71 nach außen abgedichtet mit einem Kanalstück K2 des zweiten Verschlussteils 72 verbunden.

In Analogie zu den zuvor erläuterten Ausführungsbeispielen ist auch hier das erste Verschlussteil 71 mit einem ersten Verbindungsbereich in Form eines Hülsenabschnitts 712 in einem Hohlraum 73 eines zweiten Verbindungsbereichs in Form eines Hülsenkörpers 721 des zweiten Verschlussteils 72 eindrehbar, um die beiden Verschlussteile 71, 72 miteinander nach Art einer Schraubverbindung zu verbinden und die Verschlussvorrichtung 7 zu schließen. Über eine Dichtung DR in Form eines umlaufenden Dichtrings, der zwischen einer äußeren Mantelfläche des Hülsenabschnitts 712 und einer Innenwandung des Hülsenkörpers 721 angeordnet ist, wird dabei sichergestellt, dass die beiden Verschlussteile 71, 72 dichtend aneinander anliegen und eine nach außen abgedichtete fluidtechnische Verbindung des Kanalstücks K1 in dem hohlzylindrischen Hülsenabschnitt 712 mit dem Kanalstück K2 in dem Hülsenkörper 721 hergestellt wird, wenn die Verschlussvorrichtung 7 bestimmungsgemäß geschlossen ist.

Auch hier wird über Gleitflächen 7231 an Gewindeabschnitten 413a, 713b des ersten Verschlussteils 71 und Gleitflächen 7231 an Gewindeabschnitten 723a, 723b des zweiten Verschlussteils 72 ein leichtes Eindrehen der beiden Verschlussteile 71, 72 gewährleistet. Gleichzeitig wird über gegenüberliegende Sperrflächen 7132 an den Gewindeabschnitten 713a, 713b des ersten Verschlussteils 71 und Sperrflächen 7232 an den Gewindeabschnitten 723a, 723b des zweiten Verschlussteils 72 sichergestellt, dass die beiden Verschlussteile 71, 72 in einer Schließstellung gegen eine Verdrehung relativ zueinander leicht gesperrt werden können.

Dabei ist in Anlehnung an das Beispiel der Fig. 3A bis 3F ein Federelement 74 vorgesehen, um die beiden Verschlussteile 71, 72 entlang ihrer Verbindungsachse in eine Sperrposition vorzuspannen, in der die Sperrflächen 7132 und 7232 sperrend aneinander anliegen. Das Federelement 74 stützt sich hierbei an eine dem ersten Verschlussteil 71 zugewandten kreisringförmigen Stirnfläche 7210 des zweiten Verschlussteils 72 und einem Rand de Kopfteils 711 des ersten Verschlussteils 71 ab.

Ein Abschnitt des Hülsenkörpers 721 kann ebenso wie das Kopfteil 711 als Anschlussstück für eines von zwei Schlauchenden dienen, die über die Verschlussvorrichtung 7 dichtend miteinander verbunden werden sollen.

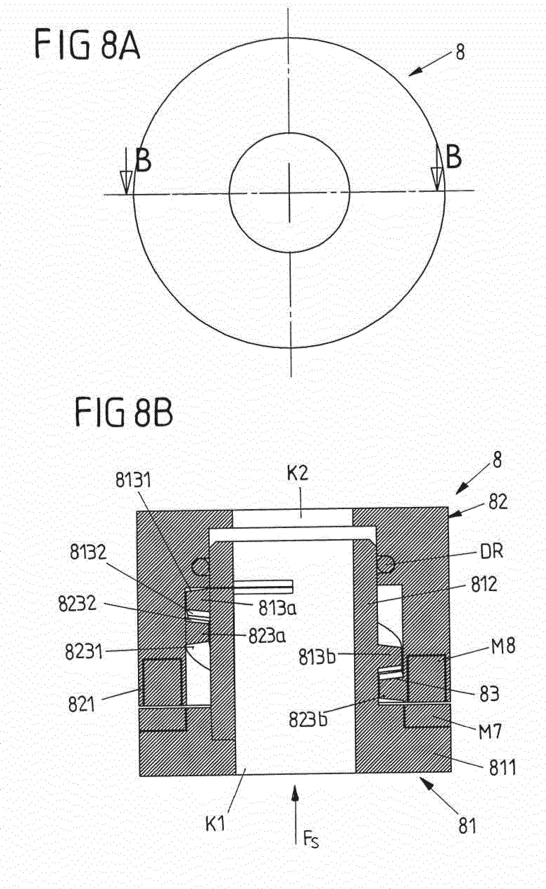

Die Fig. 8A und 8B zeigen eine mögliche Weiterbildung des Beispiels der Fig. 7A und 7B. Hierin sind übereinstimmende Komponenten anstelle mit einer vorangestellten "7" mit einer "8" gekennzeichnet. Dementsprechend weist eine erfindungsgemäße Verschlussvorrichtung 8 der Fig. 8A und 8B ein erstes Verschlussteil 81 und ein zweites Verschlussteil 82 auf, die über Gewindeabschnitte 813a, 813b und 823a, 823b und dran ausgebildete Gleitflächen 8131, 8231 leichtgängig ineinander gedreht werden können und über an den Gewindeabschnitten 813a, 813b und 823a, 823b ebenfalls ausgebildete Sperrflächen 8132, 8232 gegen eine Verdrehung gesichert sind.

In Abweichung von dem Beispiel der Fig. 7A und 7B weist eine Verschlussvorrichtung 8 Hilfsverschlussmittel in Form von Magneten M7, M8 auf, über die die beiden Verschlussteile 81, 82 zueinander und in die Schließstellung gezogen werden. Hierdurch wird das Eindrehen in die Schließstellung erleichtert.

Alternativ können die in den Verschlussteilen 81 und 82 untergebrachten Magnete M7 und M8 auch so ausgebildet und angeordnet sein, dass sie einander abstoßen. Hiermit würden die Magnete M7 und M8 eine Vorspannkraft erzeugen, um die Sperrflächen 8132 und 8232 der beiden Verschlussteile 81, 82 sperrend aneinander anliegen zu lassen, ohne dass die beiden Verschlussteile 81, 82 in ihrer Schließstellung auf Zug belastet werden. In jeden Fall ist aber auch mit einer Verschlussvorrichtung 8 gewährleistet, dass über die aneinander anliegenden Sperrflächen 8132 und 8232 eine Drehung der beiden Verschlussteile 81, 82 relativ zueinander gesperrt ist, wenn die beiden Verschlussteile 81, 82 auf Zug belastet werden.

Obwohl in den dargestellten Figuren Sperrflächen mit im Querschnitt trapezförmigen Rastzähnen dargestellt sind, ist es selbstverständlich auch möglich, alternativ ausgestaltete Sperrflächen vorzusehen, über die eine reibschlüssige und/oder formschlüssige Arretierung der beiden Verschlussteile aneinander gewährleistet ist. Beispielsweise wird eine Sperrfläche mit einer Sägezahn-Anordnung als vorteilhaft erachtet, da hierdurch die entsprechende Verschlussvorrichtung stets in einfacher Weise geschlossen bzw. zugedrückt werden kann, aber unter Zugbelastung noch effektiver gegen ein Öffnen gesichert ist als bei im Querschnitt trapezförmigen Rastzähnen.

Des Weiteren kann es vorteilhaft sein, ein (verstellbar gelagertes) Blockiermittel vorzusehen, über das in der Schließstellung eine axiale Verlagerung der beiden Verschlussteile relative zueinander blockiert werden kann. Über ein solches Blockiermittel kann somit das vorgesehene Spiel zwischen den beiden Verschlussteilen in der Schließstellung überbrückt werden, sodass die beiden Verschlussteile ohne Verlagerung des Blockiermittels nicht mehr axial so zueinander verlagert werden können, dass ihre Sperrflächen nicht mehr aneinander anliegen. Über ein derartiges Blockiermittel wird somit eine Verdrehsicherung über die an einander anliegenden Sperrflächen zusätzlich gesichert.

Ein solches Blockiermittel kann betätigbar ausgebildet sein, sodass es gezielt zwischen einer Blockier- und einer Freigabeposition verstellt werden kann, wobei das Blockiermittel in seiner Blockierposition die axiale Verlagerbarkeit der beiden Verschlussteile relativ zueinander blockiert und in seiner Freigabeposition eine solche axiale Verlagerbarkeit gestattet.

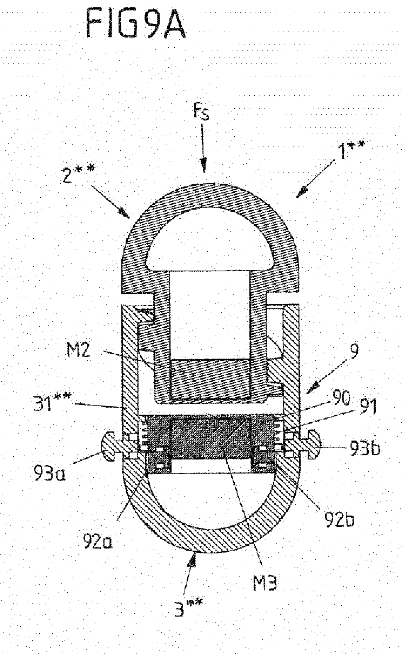

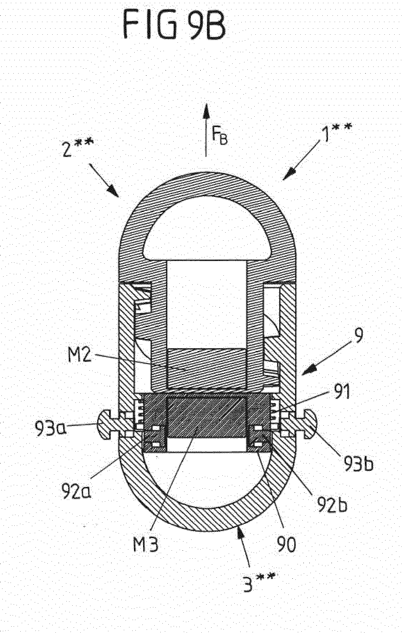

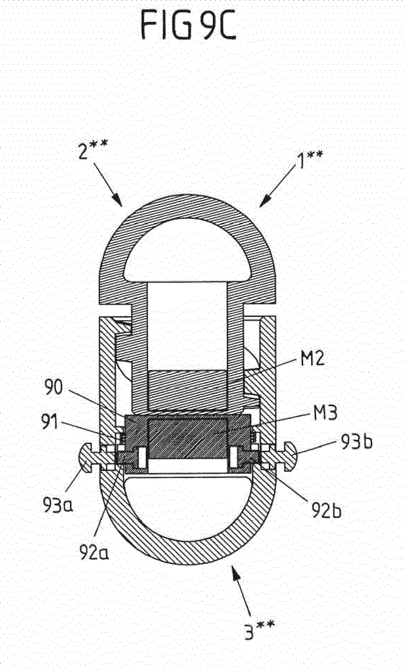

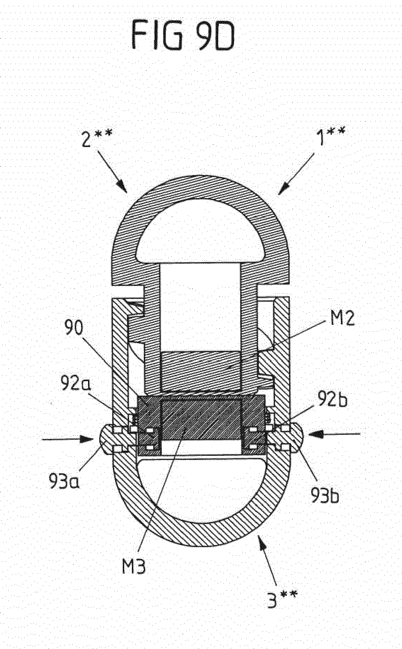

Die Figuren 9A bis 9D zeigen eine auf dem Ausführungsbeispiel der Figuren 4A bis 6C basierende Weiterbildung einer Verschlussvorrichtung 1**, bei der Blockiermittel vorgesehen sind, um in der Schließstellung eine axiale Verlagerung der beiden Verschlussteile 2** und 3*** zu blockieren und hierüber einen leicht bedienbaren Hochsicherheitsverschluss bereitzustellen.

Im Unterschied zu dem Ausführungsbeispiel der Figuren 4A bis 6C ist an den zweiten Verschlussteil 3** ein innerhalb des Hülsenkörpers 31** des zweiten Verschlussteils 3** und entlang der Verbindungsachse A verschieblich gelagertes Gehäuse 90 für den Magneten M3 vorgesehen. Das verschieblich gelagerte Gehäuse 90 bildet dabei zusammen mit Raststiften 93a, 93b ein Blockiermittel einer Blockiereinrichtung 9. Das Gehäuse 90 ist um das zwischen den beiden Verschlussteilen 2** und 3** in der Schließstellung definierte Spiel bzw. einen hiermit (nahezu) übereinstimmenden Verstellweg verschieblich, so dass das Gehäuse 90 in Richtung auf das eingedrehte erste Verschlussteil 2** verschoben werden kann, um das Spiel zwischen den beiden Verschlussteilen 2** und 3*** zu überbrücken.

Das Gehäuse 90 ist weiterhin über ein Federelement 91 innerhalb des zweiten Verschlussteils 3** entgegengesetzt zu der Schließrichtung vorgespannt. Über das Federelement 91 wird somit das Gehäuse 90 in eine Freigabeposition von dem ersten Verschlussteil 2** weg gedrückt. Vorliegend ist das Federelement 91 als Schraubfeder ausgebildet, die sich einerseits an einem Absatz der Innenwandung des Hülsenkörpers 31** und andererseits an dem Gehäuse 90 abstützt. Ausgelöst durch die Magnete M2 und M3 der beiden Verschlussteile 2** und 3** erfolgt in der Schließstellung eine Verschiebung des Gehäuses 90 mit dem darin befindlichen Magneten M3 in Richtung auf das eingedrehte erste Verschlussteil 2** entgegen der Rückstellkraft des Federelements 91.

An dem Gehäuse 91 sind ferner Raststifte 92a und 92b verstellbar gelagert. Diese Raststifte 92a und 92b sind bezogen auf die Verbindungsachse A radial verstellbar und radial nach außen vorgespannt. Dabei ist vorgesehen, dass die Raststifte 92a und 92b auf Grund ihrer Vorspannung automatisch in Rastöffnungen an der Innenwandung des Hülsenkörpers 31** einrasten, wenn das Gehäuse 91 in Folge der über die beiden Magnete M2 und M3 aufgebrachten Magnetkraft in Richtung auf das erste Verschlussteil 2** soweit in eine Blockierposition verschoben wurde, dass ein Spiel zwischen den beiden Verschlussteilen 2** und 3*** überwunden ist. Über das in seiner Blockierposition mit Hilfe der Raststifte 92a und 92b verastete Gehäuse 90 ist somit eine axiale Verlagerung der beiden Verschlussteile 2** und 3** aufeinander zu entlang der Verbindungsachse A blockiert. Die Sperrflächen 232 und 322 der Gewindeabschnitte der beiden Verschlussteile 2** und 3** bleiben somit in Kontakt und können nicht durch ein Zusammendrücken der Verschlussvorrichtung 1** entsperrt werden.

Über an der Außenwand des Hülsenkörpers 31** bedienbare Betätigungselemente 93a und 93b können die Raststifte 92a und 92b wieder außer Eingriff mit der jeweils zugeordneten Rastöffnungen gebracht werden, so dass das Gehäuse 90 wieder axial verschieblich und die Sperrung zwischen den beiden Verschlussteilen 2** und 3** gelöst werden kann.

Bei der dargestellten Ausführungsvariante kann somit das erste Verschlussteil 2** entlang der Gleitflächen 231 und 221 und mit Unterstützung der Magnete M2 und M3 leicht in das zweite Verschlussteil 3** eingedreht werden. Nach Erreichen der Schließstellung kann sich das zweite Verschlussteil 2** bereits bei einer geringfügigen Zugbelastung um das vorgesehene Spiel relativ zu dem zweiten Verschlussteil 3** verlagern, so dass die Sperrflächen 232 und 322 sperrend miteinander in Eingriff gelangen und die beiden Verschlussteile 2** und 3** gegen eine Drehung relativ zueinander sichern. Bei dieser Verlagerung in die durch die sperrende Anlage der Sperrflächen 232 und 322 aneinander definierte Sperrposition wird das verschieblich gelagerte Gehäuse 90 in Folge der Magnetkräfte zwischen den Magneten M2 und M3 mitgenommen. Das Gehäuse 90 wird somit aus einer Freigabeposition in eine Blockierposition überführt. In der Blockierposition können dann die Raststifte 92a und 92b einrasten und arretieren das Gehäuse 90 in seiner Blockierposition, in der das Gehäuse 90 verhindert, dass die Sperrung der beiden Verschlussteile 2** und 3*** über die aneinander anliegenden Sperrflächen 232 und 322 gelöst werden kann.

Zum Öffnen der Verschlussvorrichtung 1** muss die Verschlussvorrichtung 1** zunächst entlastet werden, das heißt, dass beispielsweise an dem ersten Verschlussteil 2** keine Zugkraft mehr angreifen darf. Dann kann durch die Betätigung der Betätigungselemente 93a und 93b die Arretierung des Gehäuses 90 über seine Raststifte 92a und 92b gelöst werden. Über das Federelement 91 wird dann das Gehäuse 90 in seine Freigabeposition zurückgestellt. Nun kann durch Drücken des ersten Verschlussteils 2** in Richtung des zweiten Verschlussteils 3** entlang der Verbindungsachse A die Sperrung über die Sperrflächen 232 und 322 gelöst und die Verschlussvorrichtung 1** durch Herausdrehen des ersten Verschlussteils 2** aus dem zweiten Verschlussteil 3** geöffnet werden.

Mit der dargestellten Ausführungsvariante kann ein leicht bedienbarer Hochsicherheitsverschluss bereitgestellt werden, bei dem durch definierte Stellungen des verschieblich gelagerten Gehäuses 90 des zweiten Verschlussteils 3** mit dem Magneten M3 eine Schließstellung gegen ein unbeabsichtigtes Öffnen des Verschlusses effektiv und gegebenenfalls sicht- und hörbar gesichert wird und dennoch in einfacher Weise wieder geöffnet werden kann.

An den Betätigungselementen 93a und 93b kann des Weiterhin durch eine Farbkodierung für einen Benutzer der Verschlussvorrichtung 1** visuell wahrnehmbar kenntlich gemacht sein, wenn das Gehäuse 90 der Blockiereinrichtung 9 in der Blockierposition vorliegt und arretiert ist.

Alternativ oder ergänzend kann vorgesehen sein, dass über die Einnahme der Blockierposition ein elektrisches Signal ausgelöst wird, beispielsweise über die vorgespannten Raststifte 92a, 92b, die dann an einem Gegenkontakt oder Schalter anschlagen.

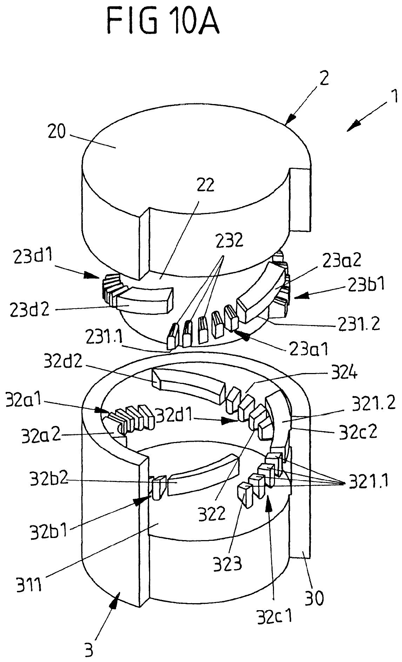

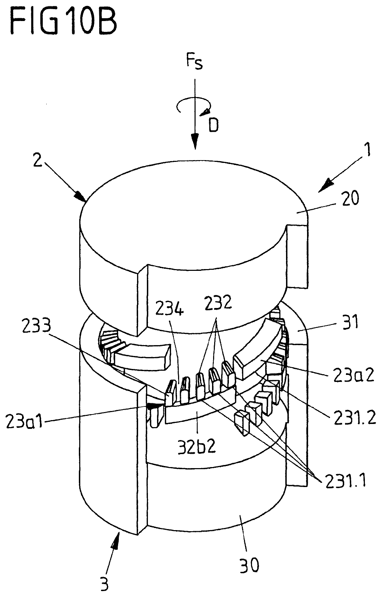

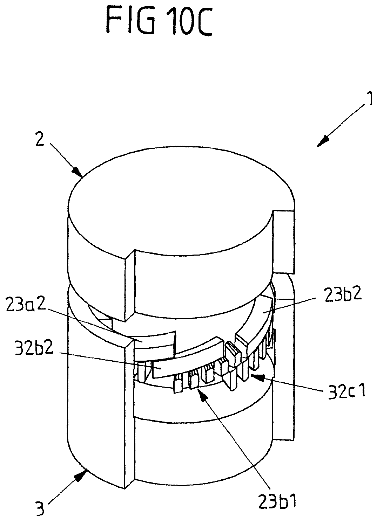

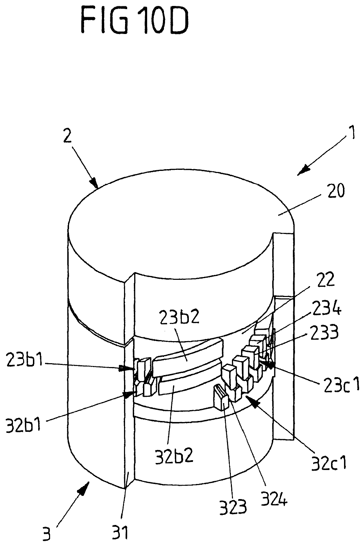

In den Figuren 10A bis 10E ist ein weiteres Beispiel einer Verschlussvorrichtung 1 veranschaulicht, bei der die beiden Verschlussteile 2, 3 jeweils Sperrflächen 232, 322 und Gleitflächen 231.1, 321.1 an zueinander beabstandeten Raststegen 233 oder 323 eines ersten segmentierten Gewindeabschnitts 23a1, 23b1, 23c1, 23d1 oder 32a1, 32b1, 32c1, 32d1 und jeweils lediglich eine Gleitfläche 231.2, 321.2 an einem in Umfangsrichtung nachfolgenden zweiten längserstreckten Gewindeabschnitt 23a2, 23b2, 23c2, 23d2; 32a2, 32b2, 32c2, 32d2 ausbilden. Die Gleitflächen 231.1, 231.2 und 321.1, 321.2 der unterschiedlichen Typen von Gewindeabschnitte 23a1/23a2, 23b1/23b2, 23c1/23c2, 23d1/23d2 und 32a1/32a2, 32b1/32b2, 32c1/32c/, 32d1/32d1 eines Verschlussteils 2 oder 3 liegen dabei entlang einer Schraubenlinie um den Hülsenabschnitt 22 oder den Hülsenkörper 31 nebeneinander und sind bei miteinander bestimmungsgemäß verbundenen Verschlussteilen 2, 3 den Gleitflächen 321.1, 321.2 und 231.1, 231.2 des jeweils anderen Verschlussteil 3, 2 zugewandt,

Jedes Verschlussteil 2, 3 weist in der Variante der Figuren 10A bis 10E mehrere (vorliegend jeweils vier) räumlich zueinander entlang des jeweiligen Verbindungsbereichs 22 oder 31 zueinander beabstandete Gewindesegmente auf, die jeweils aus einem Paar erster und zweiter Gewindeabschnitte 23a1/23a2, 23b1/23b2, 23c1/23c2, 23d1/23d2 und 32a1/32a2, 32b1/32b2, 32c1/32c2, 32d1/32d2 bestehen. Ein erster Gewindeabschnitt 23a1, 23b1, 23c1, 23d1 oder 32a1, 32b1, 32c1, 32d1 ist dabei jeweils durch voneinander separierte und radial bezüglich der Verbindungsachse A vorstehende Raststege 233 oder 323 ausgebildet. Zwischen einem Paar von Raststegen 233 oder 323 eines Verschlussteils 2, 3 ist dabei jeweils eine Rastöffnung 234 oder 324 gebildet. An gegenüberliegenden (Ober- und Unter-) Seiten der Raststege 233 und 323 sind einerseits Gleitflächen 231.1 oder 321.1 (an einer ersten Seite) und andererseits Sperrflächen 322 (an einer gegenüberliegenden zweiten Seite) definiert. Ein sich an den ersten Gewindeabschnitt 23a1, 23b1, 23c1, 23d1 oder 32a1, 32b1, 32c1, 32d1 mit seinen Raststegen 233 oder 323 jeweils anschließender Gewindeabschnitt 23a2, 23b2, 23c2, 23d2 oder 32a2, 32b2, 32c2, 32d2 eines Gewindesegments bildet demgegenüber lediglich an einer Seite eine Gleitfläche 231.2 oder 321.2 aus.

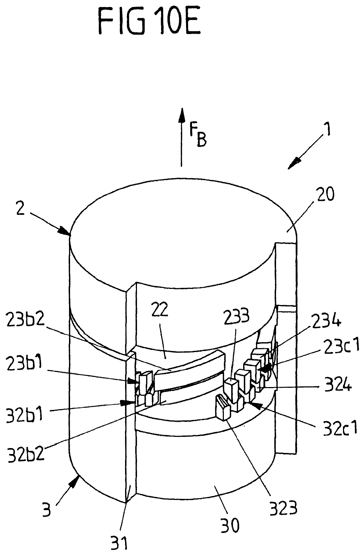

Die Gleitflächen 231.1, 231.2 des ersten Verschlussteils 2 und die Gleitflächen 321.1, 321.2 des zweiten Verschlussteil erleichtern vorliegend erneut das Schließen der Verschlussvorrichtung 1, wenn beispielsweise das erste Verschlussteil 2 nach Art einer Schraubverbindung in das zweite Verschlussteil 3 eingedreht wird. Hierbei gleiten die Gewindesegmente der beiden Verschlussteile 2, 3 an ihren unterschiedlichen Gleitfläche 231.1, 231.2 und 321.1, 321.2 aneinander entlang. Wurde die in der Figur 10E dargestellte Schließstellung erreicht, liegen sich die die mehreren Raststege 233 und 323 aufweisenden ersten Gewindeabschnitte 23a1, 23b1, 23c1, 23d1; 32a1, 32b1, 32c1, 32d1 der beiden Verschlussteile 2, 3 derart einander gegenüber, das bei einer entgegengesetzt wirkenden Belastung F_{B} (in den Figuren 10A bis 10E nach oben) die Raststege 233, 323 und Rastöffnungen 324, 234 miteinander formschlüssig in Eingriff treten können und hierdurch eine Drehung der beiden Verschlussteile 2, 3 relativ zueinander sperren.

Eine Verrastung der Raststege 233, 323 der beiden Verschlussteile 2, 3 mit zwischen diesen Raststegen 233, 323 definierten Rastöffnungen 324, 234 des jeweils anderen Verschlussteils 3, 2 ist aber während des Überführens in die Schließstellung ausgeschlossen. Gleichwohl die jeweiligen Raststege 233, 323 zeitweise Rastöffnungen 324, 234 des anderen Verschlussteils 3, 2 gegenüberliegen, ist bei einer aufgebrachten Schließkraft Fs, über die die Verschlussteile 2, 3 zueinander gedrückt werden, über die aneinander anliegenden und längserstreckt ausgebildeten zweiten Gewindeabschnitte 23a2 23b2, 23c2, 23d2; 32a2, 32b2, 32c2, 32d2 der beiden Verschlussteile stets sichergestellt, dass die Raststege 233, 323 in Wirkrichtung der Schließkraft Fs (in den Figuren 10A bis 10E nach unten) nicht mit den Rastöffnungen 324, 234 des jeweils anderen Verschlussteils 3, 2 in Eingriff geraten können.

Auch in dieser Variante sind die beiden Verschlussteile 2, 3 im Übrigen in ihrer Schließstellung durch das eingebaute Spiel axial gezielt entlang der Verbindungsachse A verstellbar zueinander, um eine Sperrung über die ineinandergreifenden Sperrflächen 232 und 322 zu lösen. Derart kann durch Zusammendrücken der beiden Verschlussteile 2 und 3 das eine Verschlussteil 2 oder 3 wieder relativ zu dem anderen Verschlussteil 3 oder 2 aus der Schließstellung gedreht werden, wobei dann auch die jeweiligen Gleitflächen 231.1, 231.2 und 321.1, 321.2 wieder miteinander in Kontakt gebracht werden.

In Abweichung von den in den Figuren darstellten Varianten, bei denen die Verschlussteile durch eine resultierende äußere Kraft Fs in einer erste Belastungsrichtung aufeinander zu gedrückt werden müssen, um ineinander gedreht werden zu können, und eine Sperrwirkung gegen ein Verdrehen bei einer äußeren Kraft F_{B} in eine entgegengesetzte Belastungsrichtung sichergestellt ist, ist selbstverständlich auch eine umgekehrte Konfiguration möglich. Hierbei wäre es beispielsweise möglich, dass beim Einschrauben gezogen werden muss, zum Beispiel gegen die Druckkraft einer Feder, und bei einer Druckbelastung eine Sperrung gegen ein Verdrehen über die Sperrflächen erreicht ist. Ein mögliches Anwendungsgebiet wären hierfür zum Beispiel Niveauregulierungsfü ße.

Eine erfindungsgemäße Verschlussvorrichtung kann beispielsweise als Teil einer Hundeleine, einer Schlauchkupplung, eines Kameraobjektivs oder eines Tragegriffs ausgestaltet sein. Beispielsweise können somit Gurt-, Seil- oder Leinenabschnitte über die Verschlussvorrichtung effektiv miteinander verbunden werden, wobei in der Benutzung aufgrund einer Belastung der Verschlussteile auf Zug ein Öffnen der Verschlussvorrichtung sicher ausgeschlossen ist.

### Bezugszeichenliste

- 1, 1', 1*, 1**: Verschlussvorrichtung
- 2, 2', 2**: 1. Verschlussteil
- 20, 20': Griffabschnitt
- 21, 21': Kopfteil
- 22, 22**: Hülsenabschnitt (1. Verbindungsbereich)
- 220**: Lageröffnung
- 231, 231.1, 231.2: Gleitfläche
- 232: Sperrfläche
- 23a, 23b, 23c ,23d: Gewindeabschnitt
- 23a1, 23b1, 23c1, 23d1: 1. Gewindeabschnitt (eines Gewindesegments)
- 23a2, 23b2, 23c2, 23d2: 2. Gewindeabschnitt (eines Gewindesegments)
- 233: Raststeg
- 234: Rastöffnung
- 24: Stirnfläche
- 3, 3', 3*, 3**: 2. Verschlussteil
- 30: Griffabschnitt
- 31, 31', 31*: Hülsenkörper (2. Verbindungsbereich)
- 310: Stirnfläche
- 311, 311': Hohlraum
- 312, 312*, 312**: Basisteil
- 3120*: Aufnahme
- 321, 321.1 321.2: Gleitfläche
- 322: Sperrfläche
- 32a, 32b, 32c: Gewindeabschnitt
- 323: Raststeg
- 324: Rastöffnung
- 32a1, 32b1, 32c1, 32d1: 1. Gewindeabschnitt (eines Gewindesegments)
- 32a2, 32b2, 32c2, 32d2: 2. Gewindeabschnitt (eines Gewindesegments)
- 4: Federelement (Vorspannelement)
- 50: Vorspannmittel
- 5a, 5b: Kontaktstift
- 6a, 6b: Kontaktplatte
- 7: Verschlussvorrichtung
- 71: 1. Verschlussteil
- 711: Kopfteil / Anschlussstück
- 712: Hülsenabschnitt (1. Verbindungsbereich)
- 7131: Gleitfläche
- 7132: Sperrfläche
- 713a, 713b: 1. Gewindeabschnitt
- 72: 2. Verschlussteil
- 721: Hülsenkörper (2. Verbindungsbereich)
- 7210: Stirnfläche
- 7231: Gleitfläche
- 7232: Sperrfläche
- 723a, 723b: 2. Gewindeabschnitt
- 73: Hohlraum
- 74: Federelement
- 8: Verschlussvorrichtung
- 81: 1. Verschlussteil
- 811: Kopfteil / Anschlussstück
- 812: Hülsenabschnitt (1. Verbindungsbereich)
- 8131: Gleitfläche
- 8132: Sperrfläche
- 813a, 813b: 1. Gewindeabschnitt
- 82: 2. Verschlussteil
- 821: Hülsenkörper (2. Verbindungsbereich)
- 8231: Gleitfläche
- 8232: Sperrfläche
- 823a, 823b: 2. Gewindeabschnitt
- 83: Hohlraum
- A: Dreh-/Verbindungsachse
- D: Drehrichtung
- DR: Dichtung
- F_{B}: Belastung
- F_{F}: Federkraft
- F_{S}: Schließkraft
- K1, K2: Kanalstück
- M2, M3, M7, M8: Magnet (Hilfsverschlussmittel)
- α: Steigungswinkel
- 9: Blockiereinrichtung
- 90: Gehäuse
- 91: Federelement
- 92a, 92b: Raststift
- 93a, 93b: Betätigungselement

## Patentansprüche

1. Verschlussvorrichtung, mit
- einem ersten Verschlussteil (2, 2', 2**, 71, 81), das mindestens einen ersten Verbindungsbereich (22, 22**, 712, 812) aufweist, und
- einem zweiten Verschlussteil (3, 3', 3*, 3**, 72, 82), das mindestens einen zweiten Verbindungsbereich (31, 31', 31*, 721, 821) aufweist,
wobei
- zum Schließen der Verschlussvorrichtung (1, 1', 1*, 1**, 7, 8) das erste Verschlussteil (2, 2', 2**, 71, 81) entlang einer Verbindungsachse (A) an das zweite Verschlussteil (3, 3', 3*, 3**, 72, 82) ansetzbar ist und unter Drehung um die Verbindungsachse (A) relativ zu dem zweiten Verschlussteil (3, 3', 3*, 3**, 72, 82) in eine Schließstellung verlagerbar ist, und
- in der Schließstellung die beiden Verschlussteile (2, 2', 2**, 71, 81; 3, 3', 3*, 3**, 72, 82) über ihre Verbindungsbereiche (22, 22**, 712, 812; 31, 31', 31*, 721, 821) aneinander gehalten sind,
wobei die Verbindungsbereiche (22, 22**, 712, 812; 31, 31', 31*, 721, 821) jeweils mindestens eine Gleitfläche (231, 231.1, 231.2, 321, 321.1, 321.2, 7131, 7231, 8131, 8231) und mindestens eine Sperrfläche (232, 322, 7132, 7232, 8132, 8232) derart aufweisen, dass
- die Verschlussteile (2, 2', 2**, 71, 81; 3, 3', 3*, 3**, 72, 82) entlang ihrer Gleitflächen (231, 231.1, 231.2, 321, 321.1, 321.2, 7131, 7231, 8131, 8231) relativ zueinander um die Verbindungsachse (A) in die Schließstellung drehbar sind, wenn an den beiden Verschlussteile (2, 2', 2**, 71, 81; 3, 3', 3*, 3**, 72, 82) eine Kraft (Fs) entlang der Verbindungsachse (A) in eine erste Belastungsrichtung angreift, und
- eine Drehung der beiden Verschlussteile (2, 2', 2**, 71, 81; 3, 3', 3*, 3**, 72, 82) relativ zueinander um die Verbindungsachse (A) durch die aneinander anliegenden Sperrflächen (232, 322, 7132, 7232, 8132, 8232) gesperrt ist, wenn an den beiden Verschlussteile (2, 2', 2**, 71, 81; 3, 3', 3*, 3**, 72, 82) eine Kraft (F_{B}) entlang der Verbindungsachse (A) in eine zweite, zu der ersten Belastungsrichtung entgegengesetzte Belastungsrichtung angreift,
wobei die Verschlussteile (2, 2', 2**, 71, 81; 3, 3', 3*, 3**, 72, 82) in der Schließstellung bezogen auf die Verbindungsachse (A) axial relativ zueinander um ein definiertes Spiel verlagerbar sind, so dass eine Sperrung über die aneinander anliegenden Sperrflächen (232, 322, 7132, 7232, 8132, 8232) gelöst und die Gleitflächen (231, 231.1, 231.2, 321, 321.1, 321.2, 7131, 7231, 8131, 8231) miteinander in Kontakt gebracht werden können, und
wobei eine Gleitfläche (231, 231.1, 231.2, 321, 321.1, 321.2, 7131, 7231, 8131, 8231) und/oder eine Sperrfläche (232, 322, 7132, 7232, 8132, 8232) an einem Gewindeabschnitt (23a, 23b, 23c, 23d; 23a1- 23d2, 713a, 713b, 813a, 813b; 32a, 32b, 32c, 32a1-32d2, 723a, 723b, 823a, 823b) des jeweiligen Verbindungsbereiches (22, 22**, 712, 812; 31, 31', 31*, 721, 821) ausgebildet ist,
**dadurch gekennzeichnet, dass**
- ein Gewindeabschnitt (23a, 23b, 23c, 23d, 23a1- 23d2, 713a, 713b, 813a, 813b; 32a, 32b, 32c, 32a1-32d2, 723a, 723b, 823a, 823b) mit einer Gleitfläche (231, 231.1, 231.2, 321, 321.1, 321.2, 7131, 7231, 8131, 8231) derart ausgebildet ist, dass über aneinander anliegende Gleitflächen (231, 231.1, 231.2, 321, 321.1, 321.2, 7131, 7231, 8131, 8231) der Verschlussteile (2, 2', 2**, 71, 81; 3, 3', 3*, 3**, 72, 82) die Verschlussteile (2, 2', 2**, 71, 81; 3, 3', 3*, 3**, 72, 82) relativ zueinander in die Schließstellung gedreht werden, wenn die beiden Verschlussteile (2, 2', 2**, 71, 81; 3, 3', 3*, 3**, 72, 82) durch äußere Kräfte (Fs) entlang der Verbindungsachse (A) aufeinander zu gedrückt werden,
- mindestens ein Hilfsverschlussmittel (M2, M3, M7, M8) vorgesehen ist, das eine Kraft ausübt, die die Verlagerung der beiden Verschlussteile (2, 2', 2**, 71, 81; 3, 3', 3*, 3**, 72, 82) in Richtung der Schließstellung unterstützt, wobei das wenigstens eine Hilfsverschlussmittel einen Magneten (M2, M3, M7, M8) umfasst, der eine Magnetkraft ausübt, die ein Drücken der beiden Verschlussteile (2, 2', 2**, 71, 81; 3, 3', 3*, 3**, 72, 82) aufeinander zu unterstützt.

2. Verschlussvorrichtung nach Anspruch 1, **dadurch gekennzeichnet, dass** eine Gleitfläche (231, 231.1, 231.2, 321, 321.1, 321.2, 7131, 7231, 8131, 8231) und eine Sperrfläche (232, 322, 7132, 7232, 8132, 8232) an sich gegenüberliegenden Seiten eines Gewindeabschnitts (23a, 23b, 23c, 23d, 23a1, 23b1, 23c1, 23d1, 713a, 713b, 813a, 813b; 32a, 32b, 32c, 32a1, 32b1, 32c1, 32d1, 723a, 723b, 823a, 823b) des jeweiligen Verbindungsbereiches (22, 22**, 712, 812; 31, 31', 31*, 721, 821) ausgebildet sind.

3. Verschlussvorrichtung nach Anspruch 1 oder 2, **dadurch gekennzeichnet, dass** die Steigung (α) eines Gewindeabschnitts (23a, 23b, 23c, 23d, 23a1- 23d2, 713a, 713b, 813a, 813b; 32a, 32b, 32c, 32a1-32d2, 723a, 723b, 823a, 823b) mit einer Gleitfläche (231, 231.1, 231.2, 321, 321.1, 321.2, 7131, 7231, 8131, 8231) größer als 10° gewählt ist und/oder die Gleitfläche (231, 231.1, 231.2, 321, 321.1, 321.2, 7131, 7231, 8131, 8231) eine glatte Oberfläche aufweist.

4. Verschlussvorrichtung nach einem der vorangehenden Ansprüche, **dadurch gekennzeichnet, dass** wenigstens ein Verbindungsbereich (22, 22**, 712, 812; 31, 31', 31*, 721, 821) ein unterbrochenes Gewinde mit mehreren in einer Umfangsrichtung um die Verbindungsachse (A) aufeinander folgenden Gewindeabschnitten (23a, 23b, 23c, 23d, 23a1- 23d2, 713a, 713b, 813a, 813b; 32a, 32b, 32c, 32a1-32d2, 723a, 723b, 823a, 823b) aufweist.

5. Verschlussvorrichtung nach Anspruch 2 und nach Anspruch 4, **dadurch gekennzeichnet, dass**
- an einem ersten Gewindeabschnitt (23a1, 23b1, 23c1, 23d1; 32a1, 32b1, 32c1, 32d1) wenigstens eines Verschlussteils (2, 3) mindestens eine erste Gleitfläche (231.1, 321.1) und mindestens eine Sperrfläche (232, 322) an sich gegenüberliegenden Seiten des Gewindeabschnitts (23a1, 23b1, 23c1, 23d1; 32a1, 32b1, 32c1, 32d1,) ausgebildet sind und
- an einem zweiten Gewindeabschnitt (23a2, 23b2, 23c2, 23d2; 32a2, 32b2, 32c2, 32d2) dieses Verschlussteils (2, 3), der in Umfangsrichtung auf den ersten Gewindeabschnitt (23a1, 23b1, 23c1, 23d1; 32a1, 32b1, 32c1, 32d1) folgt, lediglich eine zweite Gleitfläche (231.2, 321.2) ausgebildet ist.

6. Verschlussvorrichtung nach einem der vorangehenden Ansprüche, **dadurch gekennzeichnet, dass** die Sperrflächen (232, 322, 7132, 7232, 8132, 8232) reibschlüssig und/oder formschlüssig aneinander anliegen können, um eine Drehung der beiden Verschlussteile (2, 2', 2**, 71, 81; 3, 3', 3*, 3**, 72, 82) relativ zueinander zu sperren.

7. Verschlussvorrichtung nach Anspruch 6, **dadurch gekennzeichnet, dass** die Sperrflächen (232, 322, 7132, 7232, 8132, 8232) über eine Verzahnung miteinander in Eingriff bringbar sind, um eine Drehung der beiden Verschlussteile (2, 2', 2**, 71, 81; 3, 3', 3*, 3**, 72, 82) relativ zueinander zu sperren.

8. Verschlussvorrichtung nach Anspruch 6 oder 7, **dadurch gekennzeichnet, dass** an einem Verschlussteil (2, 3) mehrere Sperrflächen (232, 322) an zueinander beabstandeten und - bezogen auf die Verbindungsachse (A) - radial vorstehenden Raststegen (233, 323) ausgebildet sind und diese Raststege (233, 323) mit Rastöffnungen (324, 234) in Eingriff bringbar sind, die durch Sperrflächen (322, 232) des anderen Verschlussteils (3, 2) definiert sind.

9. Verschlussvorrichtung nach Anspruch 5 und Anspruch 8, **dadurch gekennzeichnet, dass** die Raststege (233, 323) Teil des ersten Gewindeabschnitts (23a1, 23b1, 23c1, 23d1; 32a1, 32b1, 32c1, 32d1) sind und an einer ersten Seite Teile der Sperrflächen (232, 322) ausbilden und an einer gegenüberliegenden zweiten Seite jeweils eine Gleitfläche (231.1; 321.1) ausbilden.

10. Verschlussvorrichtung nach Anspruch 8 oder 9, **dadurch gekennzeichnet, dass** an beiden Verschlussteilen (2, 3) Sperrflächen (232, 322) an Raststegen (233, 323) ausgebildet sind und eine Rastöffnung (234, 324) jeweils zwischen einem Paar von Raststegen (233, 323) eines Verschlussteils (2, 3) definiert ist.

11. Verschlussvorrichtung nach Anspruch 9 und 10, **dadurch gekennzeichnet, dass** das erste Verschlussteil (2) mit seinen die Raststege (233) aufweisenden ersten Gewindeabschnitten (23a1, 23b1, 23c1, 23d1) und das zweite Verschlussteil (3) mit seinen die Raststege (323) aufweisenden ersten Gewindeabschnitten (32a1, 32b1, 32c1, 32d1) derart ausgebildet und aufeinander abgestimmt sind, dass die Gleitflächen (231.1), die an den Raststegen (233) des ersten Verschlussteils (2) ausgebildet sind, beim Drehen in die Schließstellung nicht in Kontakt mit den Gleitflächen (321.1) kommen, die an den Raststegen (323) des zweiten Verschlussteils (3) ausgebildet sind.

12. Verschlussvorrichtung nach einem der vorangehenden Ansprüche, **dadurch gekennzeichnet, dass** mindestens ein Vorspannelement (4) vorgesehen ist, über das die beiden Verschlussteile (2, 2', 2**, 71, 81; 3, 3', 3*, 3**, 72, 82) in der Schließstellung in eine Sperrposition vorgespannt sind, in der die Sperrflächen (232, 322, 7132, 7232, 8132, 8232) sperrend aneinander anliegen.

13. Verschlussvorrichtung nach Anspruch 12, **dadurch gekennzeichnet, dass** das mindestens eine Vorspannelement (4) eine Vorspannkraft (F_{F}) erzeugt, die einem Drücken der beiden Verschlussteile (2, 2', 2**, 71, 81; 3, 3', 3*, 3**, 72, 82) aufeinander zu entgegenwirkt.

14. Verschlussvorrichtung nach einem der vorangehenden Ansprüche, **dadurch gekennzeichnet, dass**
- das erste Verschlussteil (2**) wenigstens ein erstes Kontaktelement (5a, 5b) aufweist und das zweite Verschlussteil (3**) wenigstens ein zweites Kontaktelement (6a, 6b) aufweist, wobei die beiden Kontaktelemente (5a, 6a; 5b, 6b) in der Schließstellung elektrisch leitend miteinander in Kontakt stehen und/oder
- wenigstens ein Blockiermittel (9) vorgesehen ist, über das in der Schließstellung eine axiale Verlagerung der beiden Verschlussteile (2, 2', 2**, 71, 81; 3, 3', 3*, 3**, 72, 82) relativ zueinander blockiert ist.

15. Verschlussvorrichtung nach einem der vorangehenden Ansprüche, **dadurch gekennzeichnet, dass** die Verschlussvorrichtung Teil einer Hundeleine, einer Schlauchkuppplung, eines Kameraobjektivs oder eines Tragegriffs ist.

## Claims

1. A closure device, comprising
- a first closure part (2, 2', 2**, 71, 81) which includes at least one first connecting region (22, 22**, 712, 812), and
- a second closure part (3, 3', 3*, 3**, 72, 82) which includes at least one second connecting region (31, 31', 31*, 721, 821),
wherein
- for closing the closure device (1, 1', 1*, 1**, 7, 8) the first closure part (2, 2', 2**, 71, 81) is attachable to the second closure part (3, 3', 3*, 3**, 72, 82) along a connection axis (A) and by rotation about the connection axis (A) is movable relative to the second closure part (3, 3', 3*, 3**, 72, 82) into a closed position, and
- in the closed position the two closure parts (2, 2', 2**, 71, 81; 3, 3', 3*, 3**, 72, 82) are held against each other via their connecting regions (22, 22**, 712, 812; 31, 31', 31*, 721, 821),
wherein the connecting regions (22, 22**, 712, 812; 31, 31', 31*, 721, 821) each include at least one sliding surface (231, 231.1, 231.2, 321, 321.1, 321.2, 7131, 7231, 8131, 8231) and at least one blocking surface (232, 322, 7132, 7232, 8132, 8232) such that
- the closure parts (2, 2', 2**, 71, 81; 3, 3', 3*, 3**, 72, 82) are rotatable relative to each other along their sliding surfaces (231, 231.1, 231.2, 321, 321.1, 321.2, 7131, 7231, 8131, 8231) about the connection axis (A) into the closed position, when a force (Fs) acts on the two closure parts (2, 2', 2**, 71, 81; 3, 3', 3*, 3**, 72, 82) along the connection axis (A) in a first loading direction, and
- a rotation of the two closure parts (2, 2', 2**, 71, 81; 3, 3', 3*, 3**, 72, 82) relative to each other about the connection axis (A) is blocked by the blocking surfaces (232, 322, 7132, 7232, 8132, 8232) resting against each other, when a force (F_{B}) acts on the two closure parts (2, 2', 2**, 71, 81; 3, 3', 3*, 3**, 72, 82) along the connection axis (A) in a second loading direction opposite to the first loading direction,
wherein in the closed position the closure parts (2, 2', 2**, 71, 81; 3, 3', 3*, 3**, 72, 82) are axially movable relative to each other by a defined clearance with respect to the connection axis (A), so that a blockage via the blocking surfaces (232, 322, 7132, 7232, 8132, 8232) resting against each other is released and the sliding surfaces (231, 231.1, 231.2, 321, 321.1, 321.2, 7131, 7231, 8131, 8231) can be brought in contact with each other, and
wherein a sliding surface (231, 231.1, 231.2, 321, 321.1, 321.2, 7131, 7231, 8131, 8231) and/or a blocking surface (232, 322, 7132, 7232, 8132, 8232) is formed on a threaded portion (23a, 23b, 23c, 23d; 23a1-23d2, 713a, 713b, 813a, 813b; 32a, 32b, 32c, 32a1-32d2, 723a, 723b, 823a, 823b) of the respective connecting region (22, 22**, 712, 812; 31, 31', 31*, 721, 821),
**characterized in that**
- a threaded portion (23a, 23b, 23c, 23d, 23a1-23d2, 713a, 713b, 813a, 813b; 32a, 32b, 32c, 32a1-32d2, 723a, 723b, 823a, 823b) is formed with a sliding surface (231, 231.1, 231.2, 321, 321.1, 321.2, 7131, 7231, 8131, 8231) such that via sliding surfaces (231, 231.1, 231.2, 321, 321.1, 321.2, 7131, 7231, 8131, 8231) of the closure parts (2, 2', 2**, 71, 81; 3, 3', 3*, 3**, 72, 82) resting against each other the closure parts (2, 2', 2**, 71, 81; 3, 3', 3*, 3**, 72, 82) are rotated relative to each other into the closed position, when the two closure parts (2, 2', 2**, 71, 81; 3, 3', 3*, 3**, 72, 82) are pressed towards each other by external forces (Fs) along the connection axis (A), and
- at least one auxiliary closing means (M2, M3, M7, M8) is provided, which exerts a force that supports the movement of the two closure parts (2, 2', 2**, 71, 81; 3, 3', 3*, 3**, 72, 82) in direction of the closed position, wherein the at least one auxiliary closing means comprises a magnet (M2, M3, M7, M8) which exerts a magnetic force that supports pressing of the two closure parts (2, 2', 2**, 71, 81; 3, 3', 3*, 3**, 72, 82) towards each other.

2. The closure device according to claim 1, **characterized in that** a sliding surface (231, 231.1, 231.2, 321, 321.1, 321.2, 7131, 7231, 8131, 8231) and a blocking surface (232, 322, 7132, 7232, 8132, 8232) are formed on opposite sides of a threaded portion (23a, 23b, 23c, 23d, 23a1, 23b1, 23c1, 23d1, 713a, 713b, 813a, 813b; 32a, 32b, 32c, 32a1, 32b1, 32c1, 32d1, 723a, 723b, 823a, 823b) of the respective connecting region (22, 22**, 712, 812; 31, 31', 31*, 721, 821).

3. The closure device according to claim 1 or 2, **characterized in that** the pitch (α) of a threaded portion (23a, 23b, 23c, 23d, 23a1-23d2, 713a, 713b, 813a, 813b; 32a, 32b, 32c, 32a1-32d2, 723a, 723b, 823a, 823b) with a sliding surface (231, 231.1, 231.2, 321, 321.1, 321.2, 7131, 7231, 8131, 8231) is chosen greater than 10° and/or the sliding surface (231, 231.1, 231.2, 321, 321.1, 321.2, 7131, 7231, 8131, 8231) has a smooth surface.

4. The closure device according to any of the preceding claims, **characterized in that** at least one connecting region (22, 22**, 712, 812; 31, 31', 31*, 721, 821) has an interrupted thread with several threaded portions (23a, 23b, 23c, 23d, 23a1- 23d2, 713a, 713b, 813a, 813b; 32a, 32b, 32c, 32a1-32d2, 723a, 723b, 823a, 823b) following each other in a circumferential direction about the connection axis (A).

5. The closure device according to claim 2 and claim 4, **characterized in that**
- on a first threaded portion (23a1, 23b1, 23c1, 23d1; 32a1, 32b1, 32c1, 32d1) of at least one closure part (2, 3) at least one sliding surface (231.1, 321.1) and at least one blocking surface (232, 322) are formed on opposite sides of the threaded portion (23a1, 23b1, 23c1, 23d1; 32a1, 32b1, 32c1, 32d1), and
- on a second threaded portion (23a2, 23b2, 23c2, 23d2; 32a2, 32b2, 32c2, 32d2) of this closure part (2, 3), which follows the first threaded portion (23a1, 23b1, 23c1, 23d1; 32a1, 32b1, 32c1, 32d1) in circumferential direction, merely one second sliding surface (231.2, 321.2) is formed.

6. The closure device according to any of the preceding claims, **characterized in that** the blocking surfaces (232, 322, 7132, 7232, 8132, 8232) can frictionally and/or positively rest against each other, in order to block a rotation of the two closure parts (2, 2', 2**, 71, 81; 3, 3', 3", 3**, 72, 82) relative to each other.

7. The closure device according to claim 6, **characterized in that** the blocking surfaces (232, 322, 7132, 7232, 8132, 8232) can be brought in engagement with each other via a toothing, in order to block a rotation of the two closure parts (2, 2', 2**, 71, 81; 3, 3', 3*, 3**, 72, 82) relative to each other.

8. The closure device according to claim 6 or 7, **characterized in that** on a closure part (2, 3) several blocking surfaces (232, 322) are formed on latching webs (233, 323) spaced from each other and protruding radially - with respect to the connection axis (A) - and these latching webs (233, 323) can be brought in engagement with latching openings (324, 234), which are defined by blocking surfaces (322, 232) of the other closure part (3, 2).

9. The closure device according to claim 5 and claim 8, **characterized in that** the latching webs (233, 323) are part of the first threaded portion (23a1, 23b1, 23c1, 23d1; 32a1, 32b1, 32c1, 32d1) and on a first side form parts of the blocking surfaces (232, 322) and on an opposite second side each form a sliding surface (231.1; 321.1).

10. The closure device according to claim 8 or 9, **characterized in that** on both closure parts (2, 3) blocking surfaces (232, 322) are formed on latching webs (233, 323) and a latching opening (232, 324) each is defined between a pair of latching webs (233, 323) of a closure part (2, 3).

11. The closure device according to claim 9 and 10, **characterized in that** the first closure part (2) with its first threaded portions (23a1, 23b1, 23c1, 23d1) including the latching webs (233) and the second closure part (3) with its first threaded portions (32a1, 32b1, 32c1, 32d1) including the latching webs (323) are formed and adjusted to each other such that on rotation into the closed position the sliding surfaces (231.1), which are formed on the latching webs (233) of the first closure part (2), do not get in contact with the sliding surfaces (321.1) which are formed on the latching webs (323) of the second closure part (3).

12. The closure device according to any of the preceding claims, **characterized in that** at least one pretensioning element (4) is provided, by which in the closed position the two closure parts (2, 2', 2**, 71, 81; 3, 3', 3*, 3**, 72, 82) are pretensioned into a blocking position in which the blocking surfaces (232, 322, 7132, 7232, 8132, 8232) blockingly rest against each other.

13. The closure device according to claim 12, **characterized in that** the at least one pretensioning element (4) generates a pretensioning force (F_{F}) which counteracts pressing of the two closure parts (2, 2', 2**, 71, 81; 3, 3', 3*, 3**, 72, 82) towards each other.

14. The closure device according to any of the preceding claims, **characterized in that**
- the first closure part (2**) includes at least one first contact element (5a, 5b) and the second closure part (3**) includes at least one second contact element (6a, 6b), wherein in the closed position the two contact elements (5a, 6a; 5b, 6b) are in contact with each other in an electrically conducting manner and / or
- at least one blocking means (9) is provided, by which in the closed position an axial movement of the two closure parts (2, 2', 2**, 71, 81; 3, 3', 3*, 3**, 72, 82) relative to each other is blocked.

15. The closure device according to any of the preceding claims, **characterized in that** the closure device is part of a dog leash, a hose coupling, a camera lens or a carrying handle.

## Revendications

1. Dispositif de fermeture, comprenant
- un premier élément de fermeture (2, 2', 2**, 71, 81) qui présente au moins une première zone de liaison (22, 22**, 712, 812), et
- un second élément de fermeture (3, 3', 3*, 3**, 72, 82) qui présente au moins une seconde zone de liaison (31, 31', 31*, 721, 821),
dans lequel
- pour fermer le dispositif de fermeture (1, 1', 1*, 1**, 7, 8), le premier élément de fermeture (2, 2', 2**, 71, 81) peut être appliqué sur le second élément de fermeture (3, 3', 3*, 3**, 72, 82) le long d'un axe de liaison (A) et être déplacé dans une position de fermeture par une rotation autour de l'axe de liaison (A) par rapport au second élément de fermeture (3, 3', 3*, 3**, 72, 82), et
- dans la position de fermeture, les deux éléments de fermeture (2, 2', 2**, 71, 81 ; 3, 3', 3*, 3**, 72, 82) sont maintenus l'un contre l'autre par leurs zones de liaison (22, 22**, 712, 812 ; 31, 31', 31*, 721, 821),
dans lequel les zones de liaison (22, 22**, 712, 812 ; 31, 31', 31*, 721, 821) présentent respectivement au moins une surface de glissement (231, 231.1, 231.2, 321, 321.1, 321.2, 7131, 7231, 8131, 8231) et au moins une surface de blocage (232, 322, 7132, 7232, 8132, 8232) de sorte que
- les éléments de fermeture (2, 2', 2**, 71, 81 ; 3, 3', 3*, 3**, 72, 82) peuvent tourner dans la position de fermeture les uns par rapport aux autres autour de l'axe de liaison (A) le long de leurs surfaces de glissement (231, 231.1, 231.2, 321, 321.1, 321.2, 7131, 7231, 8131, 8231) lorsque, au niveau des deux éléments de fermeture (2, 2', 2**, 71, 81 ; 3, 3', 3*, 3**, 72, 82), une force (Fs) agit le long de l'axe de liaison (A) dans une première direction de sollicitation, et
- une rotation des deux éléments de fermeture (2, 2', 2**, 71, 81 ; 3, 3', 3*, 3**, 72, 82) l'un par rapport à l'autre autour de l'axe de liaison (A) est bloquée par les surfaces de blocage (232, 322, 7132, 7232, 8132, 8232) en appui les unes contre les autres lorsque, au niveau des deux éléments de fermeture (2, 2', 2**, 71, 81 ; 3, 3', 3*, 3**, 72, 82), une force (F_{B}) agit le long de l'axe de liaison (A) dans une seconde direction de sollicitation opposée à la première direction de sollicitation,
dans lequel, dans la position de fermeture, les éléments de fermeture (2, 2', 2**, 71, 81 ; 3, 3', 3*, 3**, 72, 82) peuvent être déplacés axialement l'un par rapport à l'autre d'un jeu défini en se référant à l'axe de liaison (A), de sorte qu'un blocage via les surfaces de blocage (232, 322, 7132, 7232, 8132, 8232) en appui les unes contre les autres peut être défait et les surfaces de glissement (231, 231.1, 231.2, 321, 321.1, 321.2, 7131, 7231, 8131, 8231) peuvent être mises en contact les unes avec les autres, et
dans lequel une surface de glissement (231, 231.1, 231.2, 321, 321.1, 321.2, 7131, 7231, 8131, 8231) et/ou une surface de blocage (232, 322, 7132, 7232, 8132, 8232) est réalisée au niveau d'une section filetée (23a, 23b, 23c, 23d ; 23a1-23d2, 713a, 713b, 813a, 813b ; 32a, 32b, 32c, 32a1-32d2, 723a, 723b, 823a, 823b) de la zone de liaison (22, 22**, 712, 812 ; 31, 31', 31*, 721, 821) respective,
**caractérisé en ce que**
- une section filetée (23a, 23b, 23c, 23d, 23a1-23d2, 713a, 713b, 813a, 813b; 32a, 32b, 32c, 32a1-32d2, 723a, 723b, 823a, 823b) est réalisée avec une surface de glissement (231, 231.1, 231.2, 321, 321.1, 321.2, 7131, 7231, 8131, 8231) de sorte que, via les surfaces de glissement (231, 231.1, 231.2, 321, 321.1, 321.2, 7131, 7231, 8131, 8231) en appui les unes contre les autres des éléments de fermeture (2, 2', 2**, 71, 81 ; 3, 3', 3*, 3**, 72, 82), les éléments de fermeture (2, 2', 2**, 71, 81 ; 3, 3', 3*, 3**, 72, 82) sont tournés l'un par rapport à l'autre dans la position de fermeture lorsque les deux éléments de fermeture (2, 2', 2**, 71, 81 ; 3, 3', 3*, 3**, 72, 82) sont poussés l'un vers l'autre le long de l'axe de liaison (A) par des forces extérieures (Fs),
- au moins un moyen de fermeture auxiliaire (M2, M3, M7, M8) est prévu, lequel exerce une force qui aide au déplacement des deux éléments de fermeture (2, 2', 2**, 71, 81 ; 3, 3', 3*, 3**, 72, 82) en direction de la position de fermeture, dans lequel l'au moins un moyen de fermeture auxiliaire comprend un aimant (M2, M3, M7, M8) qui exerce une force magnétique aidant à pousser les deux éléments de fermeture (2, 2', 2**, 71, 81 ; 3, 3', 3*, 3**, 72, 82) l'un vers l'autre.

2. Dispositif de fermeture selon la revendication 1, **caractérisé en ce qu'**une surface de glissement (231, 231.1, 231.2, 321, 321.1, 321.2, 7131, 7231, 8131, 8231) et une surface de blocage (232, 322, 7132, 7232, 8132, 8232) sont réalisées au niveau de côtés opposés d'une section filetée (23a, 23b, 23c, 23d, 23a1, 23b1, 23c1, 23d1, 713a, 713b, 813a, 813b ; 32a, 32b, 32c, 32a1, 32b1, 32c1, 32d1, 723a, 723b, 823a, 823b) de la zone de liaison (22, 22**, 712, 812 ; 31, 31', 31*, 721, 821) respective.

3. Dispositif de fermeture selon la revendication 1 ou 2, **caractérisé en ce que** l'inclinaison (α) d'une section filetée (23a, 23b, 23c, 23d, 23a1-23d2, 713a, 713b, 813a, 813b ; 32a, 32b, 32c, 32a1-32d2, 723a, 723b, 823a, 823b) avec une surface de glissement (231, 231.1, 231.2, 321, 321.1, 321.2, 7131, 7231, 8131, 8231) est choisie comme étant supérieure à 10° et/ou la surface de glissement (231, 231.1, 231.2, 321, 321.1, 321.2, 7131, 7231, 8131, 8231) présente une surface lisse.

4. Dispositif de fermeture selon l'une des revendications précédentes, **caractérisé en ce qu'**au moins une zone de liaison (22, 22**, 712, 812 ; 31, 31', 31*, 721, 821) présente un filetage interrompu avec plusieurs sections filetées (23a, 23b, 23c, 23d, 23a1-23d2, 713a, 713b, 813a, 813b ; 32a, 32b, 32c, 32a1-32d2, 723a, 723b, 823a, 823b) consécutives dans une direction circonférentielle autour de l'axe de liaison (A).

5. Dispositif de fermeture selon la revendication 2 ou selon la revendication 4, **caractérisé en ce que**
- au niveau d'une première section filetée (23a1, 23b1, 23c1, 23d1 ; 32a1, 32b1, 32c1, 32d1) d'au moins un élément de fermeture (2, 3), au moins une première surface de glissement (231.1, 321.1) et au moins une surface de blocage (232, 322) sont réalisées au niveau de côtés opposés de la section filetée (23a1, 23b1, 23c1, 23d1 ; 32a1, 32b1, 32c1, 32d1) et
- au niveau d'une seconde section filetée (23a2, 23b2, 23c2, 23d2 ; 32a2, 32b2, 32c2, 32d2) de cet élément de fermeture (2, 3), qui suit la première section filetée (23a1, 23b1, 23c1, 23d1 ; 32a1, 32b1, 32c1, 32d1) dans la direction circonférentielle, est réalisée uniquement une seconde surface de glissement (231.2, 321.2).

6. Dispositif de fermeture selon l'une des revendications précédentes, **caractérisé en ce que** les surfaces de blocage (232, 322, 7132, 7232, 8132, 8232) peuvent être en appui les unes contre les autres par friction et/ou par complémentarité de forme afin de bloquer une rotation des deux éléments de fermeture (2, 2', 2**, 71, 81 ; 3, 3', 3*, 3**, 72, 82) l'un par rapport à l'autre.

7. Dispositif de fermeture selon la revendication 6, **caractérisé en ce que** les surfaces de blocage (232, 322, 7132, 7232, 8132, 8232) peuvent venir en prise les unes avec les autres via une denture afin de bloquer une rotation des deux éléments de fermeture (2, 2', 2**, 71, 81 ; 3, 3', 3*, 3**, 72, 82) l'un par rapport à l'autre.

8. Dispositif de fermeture selon la revendication 6 ou 7, **caractérisé en ce que**, au niveau d'un élément de fermeture (2, 3), plusieurs surfaces de blocage (232, 322) sont réalisées au niveau de traverses d'encliquetage (233, 323) espacées l'une de l'autre et faisant saillie radialement - en se référant à l'axe de liaison (A) - et ces traverses d'encliquetage (233, 323) peuvent venir en prise avec des ouvertures d'encliquetage (324, 234) qui sont définies par des surfaces de blocage (322, 232) de l'autre élément de fermeture (3, 2).

9. Dispositif de fermeture selon la revendication 5 et la revendication 8, **caractérisé en ce que** les traverses d'encliquetage (233, 323) font partie de la première section filetée (23a1, 23b1, 23c1, 23d1 ; 32a1, 32b1, 32c1, 32d1) et, au niveau d'un premier côté, forment des parties des surfaces de blocage (232, 322) et, au niveau d'un second côté opposé, forment respectivement une surface de glissement (231.1, 321.1).

10. Dispositif de fermeture selon la revendication 8 ou 9, **caractérisé en ce que**, au niveau des deux éléments de fermeture (2, 3), des surfaces de blocage (232, 322) sont réalisées au niveau de traverses d'encliquetage (233, 323) et une ouverture d'encliquetage (234, 324) est définie respectivement entre une paire de traverses d'encliquetage (233, 323) d'un élément de fermeture (2, 3).

11. Dispositif de fermeture selon les revendications 9 et 10, **caractérisé en ce que** le premier élément de fermeture (2) avec ses premières sections filetées (23a1, 23b1, 23c1, 23d1) présentant les traverses d'encliquetage (233) et le second élément de fermeture (3) avec ses premières sections filetées (32a1, 32b1, 32c1, 32d1) présentant les traverses d'encliquetage (323) sont réalisés et coordonnés de sorte que les surfaces de glissement (231.1) qui sont réalisées au niveau des traverses d'encliquetage (233) du premier élément de fermeture (2) ne viennent pas en contact avec les surfaces de glissement (321.1) qui sont réalisées au niveau des traverses d'encliquetage (323) du second élément de fermeture (3) lors de la rotation dans la position de fermeture.

12. Dispositif de fermeture selon l'une des revendications précédentes, **caractérisé en ce qu'**est prévu au moins un élément de précontrainte (4), via lequel, dans la position de fermeture, les deux éléments de fermeture (2, 2', 2**, 71, 81 ; 3, 3', 3*, 3**, 72, 82) sont précontraints dans une position de blocage, dans laquelle les surfaces de blocage (232, 322, 7132, 7232, 8132, 8232) sont en appui les unes contre les autres de manière bloquante.

13. Dispositif de fermeture selon la revendication 12, **caractérisé en ce que** l'au moins un élément de précontrainte (4) génère une force de précontrainte (F_{F}) qui contre une poussée des deux éléments de fermeture (2, 2', 2**, 71, 81 ; 3, 3', 3*, 3**, 72, 82) l'un vers l'autre.

14. Dispositif de fermeture selon l'une des revendications précédentes, **caractérisé en ce que**
- le premier élément de fermeture (2**) présente au moins un premier élément de contact (5a, 5b) et le second élément de fermeture (3**) présente au moins un second élément de contact (6a, 6b), dans lequel les deux éléments de contact (5a, 6a; 5b, 6b) sont en contact l'un avec l'autre de manière électriquement conductrice dans la position de fermeture et/ou
- au moins un moyen d'entrave (9) est prévu, via lequel, dans la position de fermeture, un déplacement axial des deux éléments de fermeture (2, 2', 2**, 71, 81 ; 3, 3', 3*, 3**, 72, 82) l'un par rapport à l'autre est entravé.

15. Dispositif de fermeture selon l'une des revendications précédentes, **caractérisé en ce que** le dispositif de fermeture fait partie d'une laisse, d'un raccord de tuyau, d'un objectif photographique ou d'une poignée de transport.
